# EUROPÄISCHE PATENTSCHRIFT

(11) **EP 4 003 819 B1**
(45) Veröffentlichungstag und Bekanntmachung des Hinweises auf die Patenterteilung: **03.09.2025**
(21) Anmeldenummer: 20753688.9
(22) Anmeldetag: 24.07.2020
(51) Int. Cl.: B62D 33/04, B62D 63/02

(54) **FAHRZEUG**
VEHICLE
VÉHICULE

(30) Priorität: 26.07.2019 CH 9592019
(43) Veröffentlichungstag der Anmeldung: 01.06.2022
(73) Patentinhaber: Rüfli, Franz, 3253 Schnottwil (CH)
(72) Erfinder: Rüfli, Franz, 3253 Schnottwil (CH)
(74) Vertreter: Keller Schneider Patent- und Markenanwälte AG
(86) Internationale Anmeldenummer: PCT/EP2020/071010
(87) Internationale Veröffentlichungsnummer: WO 2021/018785

(56) Entgegenhaltungen:
- FR-A1- 3 063 274
- JP-A- H0 692 273
- US-A1- 2001 042 650
- US-B1- 7 188 694

## Beschreibung

### Technisches Gebiet

Die Erfindung betrifft ein Fahrzeug, umfassend einen ersten Fahrzeugteil und einen zweiten Fahrzeugteil, wobei der erste Fahrzeugteil ein um eine erste Drehachse drehbares erstes Laufrad umfasst und wobei der zweite Fahrzeugteil ein um eine zweite Drehachse drehbares zweites Laufrad umfasst. Das erste Laufrad und das zweite Laufrad weisen denselben Laufraddurchmesser auf, und eine erste Lagerung zur drehbaren Lagerung des ersten Laufrads und eine zweite Lagerung zur drehbaren Lagerung des zweiten Laufrads sind über einen Gelenkmechanismus derart miteinander verbunden, dass eine relative Ausrichtung der ersten Drehachse und der zweiten Drehachse zueinander veränderlich ist. Die Erfindung betrifft weiter einen Fahrzeugteil für ein solches Fahrzeug, eine Fahrzeuganordnung, umfassend mindestens zwei solche Fahrzeuge und ein Verfahren zum Transformieren eines Fahrzeugs.

### Stand der Technik

Entsprechende Fahrzeuge sind bekannt. Die erste Drehachse und die zweite Drehachse können hintereinander angeordnet sein, wie bei einem Fahrrad, oder auch in einer gemeinsamen Ebene nebeneinander, so dass sich ein "paralleles Zweirad" ergibt. Bei solchen parallelen Zweirädern sind Modelle bekannt, bei welchen die Laufräder verhältnismässig klein sind und eine Plattform zum Tragen einer Person zwischen oder oberhalb der Räder angeordnet ist. Bei anderen Modellen sind die Laufräder gross und schliessen seitlich einen Aufnahmeraum ein, vgl. z. B. US 2004/0060759 A1 (R. G. Mcl<enzie Hume), US 2004/0182625 A1 (A. K. Pal), EP 3 025 882 A1 (Shenzhen Zhiyou Battery Integration Technology Co., Ltd.). Auch die FR 3 063 274 A1 (Benjamin Talon) beschreibt ein autonomes Fahrzeug mit zwei grossen externen Rädern und einem zentralen Kasten zum Transport von Gütern.

Die JP H06 92273 (Takahiro Hoshino) betrifft ein selbsttragendes Transportfahrzeug umfassend zwei Räder, welche sich auf jeder Seite des Transportfahrzeugs befinden. Die Räder können dabei gemeinsam im Verhältnis zum Boden angewinkelt werden und dadurch die Kurvenfahrt des Transportfahrzeugs unterstützen.

Bei der US 7,188,694 B1 (Rodney L. Blair) wird ein Amphibienfahrzeug mit einem Paar grosser aufblasbarer Radschläuche, die eine gemeinsame Achse haben, beschrieben. Mit jeweils einem eigenen Motor können die Radschläuche unabhängig voneinander betrieben werden. Durch den Auftrieb der Radschläuche kann sich das Fahrzeug sowohl auf dem Land als auch auf dem Wasser fortbewegen.

Solche Modelle haben aber üblicherweise ein beschränktes Einsatzgebiet. Sie weisen oft einen erheblichen Luft- und Reibungswiderstand auf. Ihr Platzbedarf ist verhältnismässig gross, und das Fahrverhalten wenig dynamisch, insbesondere in Kurven.

### Darstellung der Erfindung

Aufgabe der Erfindung ist es, eines dem eingangs genannten technischen Gebiet zugehörende Fahrzeug zu schaffen, welche genannte Nachteile des Standes der Technik behebt.

Die Lösung der Aufgabe ist durch die Merkmale des Anspruchs 1 definiert. Gemäss der Erfindung ist das Fahrzeug mit Hilfe des Gelenkmechanismus aus einer ersten Fahrkonfiguration mit zueinander geneigten erster und zweiter Drehachse kontinuierlich in eine zweite Fahrkonfiguration mit paralleler erster und zweiter Drehachse überführbar, wobei in der zweiten Fahrkonfiguration ein Abstand einer ersten Kontaktfläche des ersten Laufrads von einer zweiten Kontaktfläche des zweiten Laufrads kleiner ist als ein Zehntel des Laufraddurchmessers.

Das Fahrzeug lässt sich somit aus einer zweispurigen Fahrkonfiguration (erste Fahrkonfiguration), entsprechend einem parallelen Zweirad, in eine einspurige Fahrkonfiguration (zweite Fahrkonfiguration), entsprechend einem Einrad, überführen bzw. transformieren. Entsprechend ergibt sich eine stabile Konfiguration für den Stillstand und die Langsamfahrt als auch eine dynamische Konfiguration mit minimiertem Luft und Rollwiderstand und einer dynamischen Lenkbarkeit für höhere Geschwindigkeiten.

Der genannte Abstand bezieht sich auf den Abstand zwischen den inneren Begrenzungen der Kontaktflächen im Fahrbetrieb mit einer zulässigen Nutzlast. In der ersten Fahrkonfiguration beträgt der Neigungswinkel der ersten und der zweiten Drehachse zueinander insbesondere mindestens 3°, bevorzugt mindestens 5°. In der einspurigen Fahrkonfiguration ist der Winkel kleiner als 2°, bevorzugt kleiner als 1°. Der Winkel kann auch leicht negativ sein, d. h. im Kontaktbereich der beiden Laufräder mit dem Untergrund weisen die Kontaktflächen der beiden Laufräder einen geringeren Abstand voneinander auf als diametral gegenüberliegend.

Der Übergang zwischen der ersten und zweiten Fahrkonfiguration erfolgt insbesondere stufenlos, so dass Zwischenpositionen temporär oder für längere Zeit eingenommen werden können.

Bevorzugt berühren sich das erste Laufrad und das zweite Laufrad in der ersten Fahrkonfiguration und/oder in der zweiten Fahrkonfiguration im Bereich ihres Umfangs. Dadurch wird das Fahrzeug stabilisiert, in der zweiten Fahrkonfiguration ergibt sich zudem eine minimale Breite der wirksamen Kontaktfläche. In der ersten Fahrkonfiguration berühren sich die Laufräder in einer Umfangsposition, die dem Kontaktbereich mit dem Untergrund diametral gegenüberliegt. In der zweiten Fahrkonfiguration berühren sich die Laufräder dagegen im Kontaktbereich. Es sind Konfigurationen möglich, bei denen sich die Laufräder nur in einer der Fahrkonfigurationen berühren, z. B. mit einem Schwenkgelenk, das in einer höheren oder einer tieferen Ebene in Bezug auf die Rotationsachsen angeordnet ist, und Konfigurationen, bei denen sich die Laufräder in beiden Fahrkonfigurationen berühren können, z. B. mit einem Schwenkgelenk in Höhe der Rotationsachsen oder mit einem Mechanismus, der eine Änderung des gegenseitigen Abstands der Laufrädernaben ermöglicht, z. B. einer Parallelkinematik.

Alternativ berühren sich die Laufräder weder in der ersten noch in der zweiten Fahrkonfiguration.

Bei einer bevorzugten Ausführungsform sind der erste Fahrzeugteil und der zweite Fahrzeugteil als flächige Seitenteile, insbesondere als Halbschalen, ausgebildet, die zusammen einen Aufnahmeraum einschliessen, wobei eine radiale Ausdehnung der Halbschalen 75-100% des Laufraddurchmessers beträgt. Der Aufnahmeraum kann Lasten, Gegenstände und/oder Personen aufnehmen. Aussen muss nichts an den Fahrzeugteilen befestigt werden, wodurch sich ein kompakter Aufbau und eine gute Aerodynamik ergibt. Die Seitenteile und insbesondere die Halbschalen schützen die Lasten und/oder Personen im Aufnahmeraum von äusseren Einwirkungen, z. B. Regen oder Staub. Falls sich die beiden Halbschalen in der zweiten Fahrkonfiguration vollständig aneinanderlegen lassen und eine Abdichtung zwischen ihnen vorgesehen wird, ergibt sich bei wasserdichten Halbschalen eine schwimmfähige Vorrichtung. Sofern an den Laufrädern geeignete Elemente, z. B. Schaufeln, vorgesehen sind, kann das Fahrzeug also amphibisch eingesetzt werden.

Bevorzugt beträgt in diesem Fall der Laufraddurchmesser mindestens 1.2 m, und der Aufnahmeraum umfasst eine Plattform zur Aufnahme mindestens einer Person. Die Plattform kann beispielsweise als Stehplattform, Sitz oder Liege ausgebildet sein.

Bei anderen Ausführungsformen befindet sich der Aufnahmeraum nicht oder nur teilweise zwischen den Fahrzeugteilen. Beispielsweise wird eine Plattform oder ein Aufbau von zwei (oder mehr) erfindungsgemässen Fahrzeugen mit je zwei Fahrzeugteilen getragen.

Bevorzugt ist die Überführung von der ersten in die zweite Fahrkonfiguration und von der zweiten in die erste Fahrkonfiguration während der Fahrt des Fahrzeugs möglich. Das Fahrzeug kann somit aus dem Stand in der ersten Fahrkonfiguration losfahren, bei wachsender Geschwindigkeit erfolgt dann die Überführung in die zweite Fahrkonfiguration. Wenn das Fahrzeug abgebremst wird, erfolgt wiederum eine Überführung in die erste Konfiguration. So ist die Konfiguration des Fahrzeugs stets dem aktuellen Bewegungszustand angepasst. Insbesondere in der ersten Fahrkonfiguration kann der Winkel in Abhängigkeit der Geschwindigkeit (und allenfalls weiterer Faktoren wie z. B. der Strassenbeschaffenheit, der Temperatur oder der Witterungsbedingungen) variabel eingestellt werden.

Mit Vorteil erfolgt die Überführung zwischen der ersten Fahrkonfiguration und der zweiten Fahrkonfiguration automatisch, in Abhängigkeit einer Fahrtgeschwindigkeit des Fahrzeugs. Idealerweise ist die Abhängigkeit des Übergangs von den relevanten Parametern in einer ersten Richtung etwas von derjenigen in einer zweiten Richtung versetzt (Hysterese), so dass ein oszillierendes Hin- und Her im Bereich einer Parametergrenze (z. B. bei einer bestimmten Fahrgeschwindigkeit) vermieden wird.

Es sind Ausführungsformen möglich, bei welchen die Überführung manuell ausgelöst und/oder gesteuert wird, insbesondere bei manuell angetriebenen Fahrzeugen oder solchen für den sportlichen Einsatz.

Bei einer bevorzugten Ausführungsform erfolgt die automatische Überführung aufgrund einwirkender Momente ohne zusätzliche Krafteinwirkung. Dadurch ergibt sich eine besonders einfache und sichere Konstruktion.

Alternativ ist ein Motor bzw. Stelltrieb (z. B. pneumatisch oder hydraulisch) für die Einstellung der Neigung vorgesehen.

Bei einer bevorzugten Ausführungsform umfasst jeder der Fahrzeugteile einen unabhängig steuerbaren Motor. Dies ermöglicht eine Konstruktion mit einer geringen Zahl mechanischer Teile. Zudem ergibt sich bereits aufgrund der Konstruktion eine symmetrische Gewichtsverteilung.

Die Lenkung erfolgt im zweireihigen Betrieb (erste Fahrkonfiguration) insbesondere mit Hilfe einer Geschwindigkeitsdifferenz zwischen den beiden Laufrädern.

Im einreihigen Betrieb (zweite Fahrkonfiguration) bei mechanisch fest verbundenen Radmodulen erfolgt das Lenken insbesondere mittels Gewichtsverlagerung und asymmetrischen Kräfteimpulsen. Dabei kann es sich um eine Verlagerung der Position eines Fahrers bzw. einer Fahrerin handeln und/oder um die manuelle oder automatische Verlagerung von rotierenden und/oder nicht rotierenden Gewichtskomponenten und/oder gyroskopischen Vorrichtungen des Fahrzeugs. Bei den Gewichtskomponenten kann es sich bei elektrischen angetriebenen Fahrzeugen insbesondere um Energiespeicher (Batterien) handeln.

Alternativ ist nur ein Antriebsmotor vorhanden und die Antriebskraft wird beispielsweise über ein Differentialgetriebe zu den einzelnen Antriebsrädern übertragen.

Mit Vorteil sind die Motoren als Elektromotoren ausgebildet, wobei an mindestens einem Stator eines der Motoren innenliegend eine Tragevorrichtung für aufzunehmende Lasten (Personen und/oder Güter) angeordnet ist. Es ergibt sich eine einfache Konstruktion.

Bevorzugt handelt es sich bei den Elektromotoren um Torquemotoren. Diese ermöglichen ein hohes Drehmoment bei geringen Drehzahlen und einer geringen Zahl mechanischer Bauelemente, namentlich deshalb weil ein separates Getriebe entfällt.

Andere Elektromotoren (mit oder ohne zusätzliches Getriebe) sind ebenfalls möglich.

Alternativ sind andere Antriebsarten möglich, z. B. Hydraulikmotoren. Auch hybride Antriebe, bei denen ein Antriebsmotor mit einem manuellen Antriebsmechanismus kombiniert ist, sowie rein manuelle Antriebe sind möglich.

Bei bevorzugten Ausführungsformen weist eine Schwenkachse des Gelenkmechanismus einen radialen Abstand von der ersten Drehachse und von der zweiten Drehachse auf, der mindestens ein Drittel des Laufraddurchmessers, insbesondere mindestens 4/10 des Laufraddurchmessers beträgt. Die Schwenkachse kann durch eine physische Achse definiert sein oder sich aufgrund der Geometrie des Gelenkmechanismus als virtuelle Achse ergeben. Im letzteren Fall kann sich ihre Position im Betrieb relativ zu den Laufrädern verändern.

Die Schwenkachse kann sowohl oberhalb der ersten und zweiten Drehachse als auch unterhalb derselben angeordnet sein. Wenn die Laufräder einen Aufnahmeraum einschliessen, so befindet sich dessen Hauptteil im ersten Fall primär unterhalb der Schwenkachse, im zweiten Fall primär oberhalb der Schwenkachse. Die Anordnung der Schwenkachse im oberen Bereich des Fahrzeugs ermöglicht eine besonders gute Stabilität in der ersten Fahrkonfiguration.

Bei einer ersten Gruppe bevorzugter Ausführungsformen ist der Gelenkmechanismus parallelkinematisch ausgebildet. Dies ermöglicht eine hohe Flexibilität in Bezug auf den Betrieb und die Nutzung des Raums zwischen den Fahrzeugteilen und einen mechanischen Aufbau mit geringem Gewicht. Elemente der Parallelkinematik können die beiden Fahrzeugteile direkt verbinden, eine Stange kann z. B. zwischen zwei Gelenken verlaufen, die je an einem der Fahrzeugteile fest angeordnet sind. In diesem Fall kann eine geeignete Parallelkinematik z. B. mit 2x3 Pneumatikzylindern aufgebaut werden.

Elemente der Parallelkinematik können auch zwischen jeweils einem der Fahrzeugteile und einem mittleren Element verlaufen. Dieses mittlere Element kann u. a. als Aufnahmekörper ausgebildet sein. Es ist auch möglich, mehrere mittlere Elemente vorzusehen, wobei beidseitig das jeweils äusserste dieser Elemente über Elemente der Parallelkinematik mit den Fahrzeugteilen verbunden ist. Zwischen diesen mittleren Elementen kann beispielsweise eine Plattform zur Aufnahme von Personen und/oder Gütern fixiert werden. Alle oder einige der Elemente können beispielsweise als Pneumatikzylinder ausgeführt sein. Die Steuerung erfolgt insbesondere computerbasiert.

Bei einer zweiten Gruppe bevorzugter Ausführungsformen ist der Gelenkmechanismus seriellkinematisch ausgebildet ist. Dies ermöglicht eine einfache Steuerung und einen einfachen mechanischen Aufbau. So kann der Gelenkmechanismus z. B. durch ein (die Schwenkachse definierendes) Scharnier und zwei Pneumatikzylinder aufgebaut werden.

Das Fahrzeug kann eine Stützeinheit umfassen, welche mit dem ersten und dem zweiten Fahrzeugteil verbunden ist und mindestens eine weitere Bodenkontaktfläche aufweist. Die Verbindung kann direkt mit dem entsprechenden Fahrzeugteil erfolgen oder indirekt, z. B. über die Befestigung mit dem jeweils anderen Fahrzeugteil, diesen anderen Fahrzeugteil und den Schwenkmechanismus. Die Stützeinheit umfasst insbesondere ein weiteres Rad für den Bodenkontakt, insbesondere ein passives Rad. Es sind aber auch Stützeinheiten denkbar, die nur eine Kufe oder eine Aufsetzplatte umfassen und primär im Hinblick auf den Stillstand des Fahrzeugs zum Einsatz gelangen.

Die Fahrzeugteile des Fahrzeugs können - wie weiter unten erläutert - modular in vielerlei Anwendungsfällen genutzt und miteinander kombiniert werden. Die Erfindung betrifft deshalb auch die einzelnen Fahrzeugteile (Radmodule). Diese umfassen ein um eine Drehachse drehbares Laufrad, einen Antrieb für das Laufrad und ein Anschlusselement für einen Gelenkmechanismus. Sie können weitere Komponenten umfassen, namentlich Antriebskomponenten (z. B. Elektromotoren).

Mehrere erfindungsgemässe Fahrzeuge können - wie ebenfalls weiter unten erläutert - für die temporäre oder permanente Nutzung kombiniert werden. Eine entsprechende Fahrzeuganordnung umfasst also mindestens zwei erfindungsgemässe Fahrzeuge, die mechanisch, insbesondere lösbar, miteinander verbunden sind. Die Fahrzeuge dienen somit als Grundmodul, wobei mehrere Grundmodule flexibel miteinander kombinierbar sind. Bei einer permanenten Kombination ergeben sich reduzierte Herstellungskosten aufgrund der reduzierten Anzahl unterschiedlicher Baugruppen. Durch temporäre Kombinationen erweitern sich die Anwendungsmöglichkeiten.

In einer bevorzugten Variante sind die mindestens zwei Fahrzeuge durch einen Verbindungsteil miteinander verbunden, wobei der Verbindungsteil einen Aufnahmeraum für aufzunehmende Lasten (Güter und/oder Personen) bereitstellt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein parallel kinematisches Basismodul mit möglichen Erweiterungsmodulen und Anwendungen in der I-Radwinkelposition von vorne;
- Fig. 2: zwei seriellkinematisch verbundene und seriell hintereinander angeordnete Basismodule gleicher Grösse von der Seite;
- Fig. 3: ein seriell kinematisches Basismodul in einer Ansicht von hinten;
- Fig. 4: ein seriellkinematisches Basismodul in einer Ansicht im Raum seitlich von vorne;
- Fig. 5: ein seriellkinematisches Basismodul in der A-Radwinkelposition von vorne;
- Fig. 6: ein seriellkinematisches Basismodul in der V-Radwinkelposition von vorne;
- Fig. 7: ein seriell kinematisches Basismodul in der V-Radwinkelposition von oben;
- Fig. 8: ein beliebig kinematisches oder parallel kinematisches Basismodul in der I-Radwinkelposition von vorne; und
- Fig. 9: zwei parallel verbundene und seriell hintereinander angeordnete Basismodule unterschiedlicher Grösse.

Grundsätzlich sind in den Figuren gleiche Teile mit gleichen Bezugszeichen versehen.

### Wege zur Ausführung der Erfindung

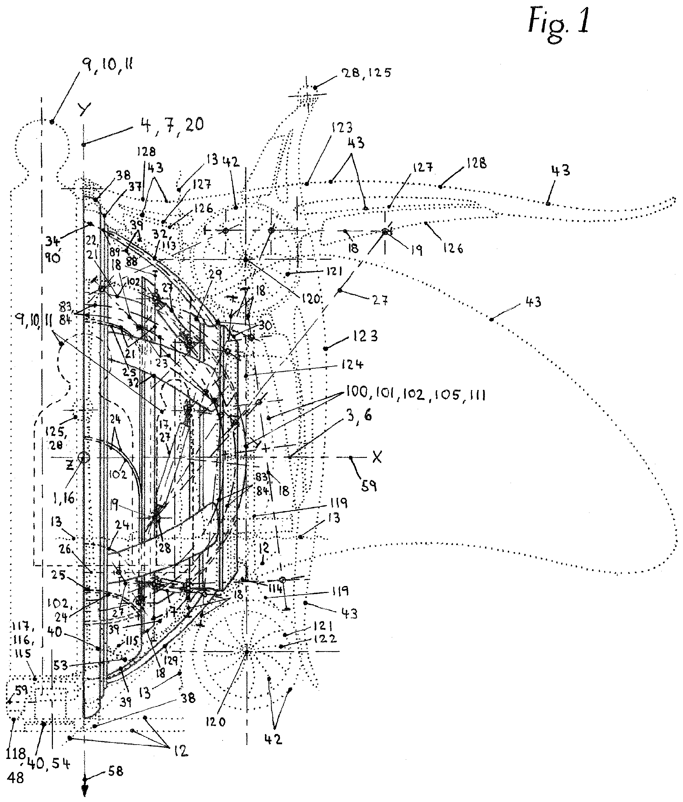

Die Vorrichtung wird durch die Ausführungsbeispiele gemäss den Figuren 1 bis 9 dargestellt. Es werden nur für die Erfindung relevante Bauteile symbolisch dargestellt. Elektrische, hydraulische und/oder pneumatische Verbindungen werden nicht dargestellt. Durchgezogene dicke Linien beziehen sich auf einzelne Bauteile, durchgezogene dünne Linien auf Hilfs- und Verweislinien, Strichlinien auf die unsichtbaren Bereiche relevanter Bauteile, Punktlinien auf Positionen, Erweiterungen, Varianten oder Module, und Strichpunktlinien auf das Koordinatensystem, Rotations- und Symmetrieachsen, Bewegungsverläufe, Mehrfachdarstellungen, und parallelkinematische Vorrichtungen.

Die parallelkinematischen Vorrichtungen 17 mit den parallelkinematischen Plattformen 18 werden symbolisch als Strichpunktlinien mit rechtwinkligen Begrenzungslinien, die parallelkinematischen Linearvorrichtungen als Strichpunktlinien und die parallelkinematischen Gelenke 19 durch einen Kreis dargestellt.

Figur 1 stellt ein parallelkinematisches Basismodul 16 zur Fortbewegung mindestens einer Person 9 und/oder eines Gegenstandes 10, nachfolgend auch Lastköper 11 genannt, mit möglichen Erweiterungsmodulen und Anwendungen in der I-Radwinkelposition von vorne dar. Die Y-Achse des Basismoduls 16 entspricht einer Symmetrieachse 20. Die Statorverbindungsvorrichtung 21 besteht aus zwei parallelkinematischen Vorrichtungen 17 mit jeweils einer inneren und einer äusseren ringförmigen parallelkinematischen Plattform 18. Die inneren parallelkinematischen Plattformen 18 sind über eine Statordistanzvorrichtung 22 fest oder über mindestens eine weitere Statorschwenkvorrichtung 23 kinematisch miteinander verbunden. Die Statordistanzvorrichtung 22 besteht aus einer oder mehreren festen, kugelförmigen zentralen Statordistanzsegmenten 24, und/oder aus einer oder mehreren festen, kugelförmigen und/oder einer oder mehreren um die globale X-Achse 3 schwenkbaren Türvorrichtungen 25, und aus einem oder mehreren seitlichen Statordistanzsegmenten 24. Der Lastkörper 11 ist über eine Lastträgervorrichtung 26 beidseitig mit den inneren parallelkinematischen Plattformen 18 über linearkinematische Vorrichtungen 27 mit Kugelgelenkverschlussvorrichtungen 28 verbunden. Die äusseren parallelkinematischen Plattformen 18 sind auf beiden Seiten mit je einem Stator 29 eines lagerlosen Torquemotors 30 mit Hohlwelle verbunden. Die Rotorverbindungsvorrichtung 31 besteht aus festen Streben 32, und/oder aus von der Radialposition des Radmoduls 33 abhängigen oder nicht abhängigen, um die Rotorstrebenachse 34 schwenkbar verbundenen Rotorstreben 35, die den Rotor 36 mit dem Radkörper 37 und dem Radreifen 38 verbinden. Mehrere Energiespeichervorrichtungen 39 sind zentral schwenkbar hintereinander um die X-Achse der Statorverbindungsvorrichtung 21 verbunden.

Mehrere Energiespeichervorrichtungen 39 können in Form eines Bodenverbindungsmoduls 40 mit Kupplungsvorrichtung 52 und verlängerter Energiespeicherfussvorrichtung 53 zwecks Wind- und Sonnentracking mit oder ohne Bodenverbindungsvorrichtung 54, als bewegliche Fussvorrichtungen in ebenem oder unebenem Gelände verwendet werden.

Als weitere Anwendungen in Form von Erweiterungsmodulen wird eine Vorrichtung zur Fortbewegung mit einem Radmodul als Einrad, ein Bodenverbindungsmodul 40 mit zusätzlicher Funktion als Trackervorrichtung 41, mehrere Schubvorrichtungen 42 und Tragflächenvorrichtungen 43 dargestellt.

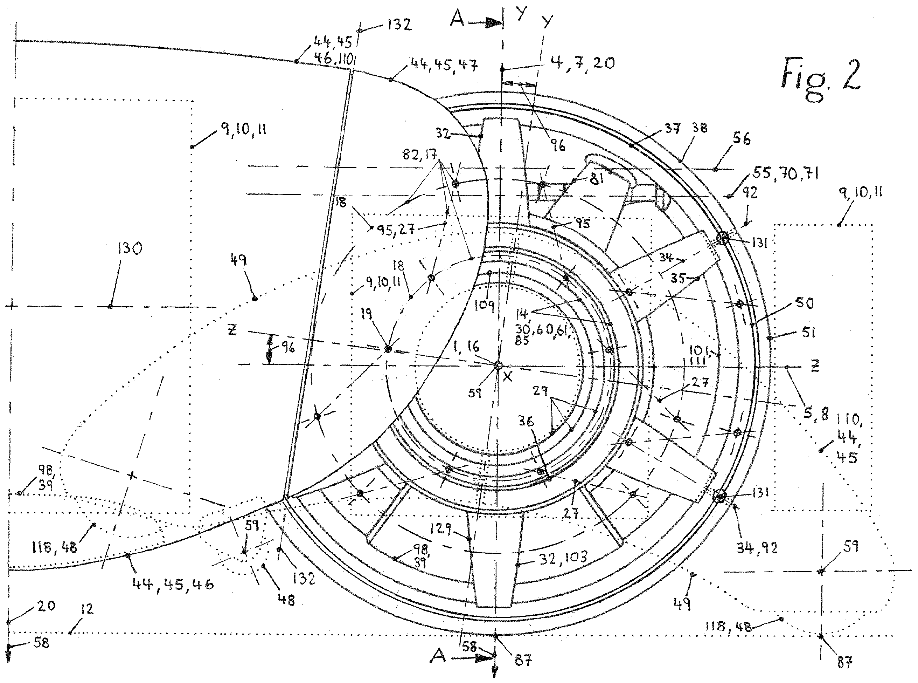

Figur 2 stellt durch die Symmetrieachse 20 zwei seriellkinematisch verbundene und seriell hintereinander angeordnete Basismodule 16 mit Erweiterungsmodulen, die über eine Basismodulverbindungsvorrichtung 44, auch Basisverbindungsmodul 45 oder Sänfte 46 genannt, mit kinematischer aerodynamische Verbindungsschale 47 und temporärem Hilfsrad 48, parallelkinematisch oder beliebig miteinander verbunden sind, in der I-Radwinkelposition von der Seite, dar. Sichtbar sind die seitlich um die lokalen X-Achsen der Radmodule 33 schwenkbar verbundenen Energiespeichervorrichtungen 39. Eine parallelkinematische Verbindungsvorrichtung wird symbolisch von der Seite dargestellt. Die Sänfte 46 als Erweiterungsmodul kann, abhängig vom Verwendungszweck, bei dauerhaft geöffneten Radmodulen 33, zentral innerhalb der Radmodule 33, und/oder über die Aussenseite des Basismoduls 16, bei der Verwendung eines Hohlwellenmotores, innerhalb der Statoren 29 direkt mit dem Lastkörper 11, oder indirekt, und/oder seitlich ausserhalb der Radmodule 33, über mindestens einen Stator 29, fest oder beweglich mit mindestens einem Basismodul 16 temporär, beispielsweise über Schnellverschlusskupplungen, oder dauerhaft verbunden sein. Bei einer temporären Verbindung kann die Sänfte 46 auch mit nur einem Basismodul 16 mittels mindestens einem Hilfsrad 48 oder einer beliebigen Rationsvorrichtung 14 fortbewegt werden. Als weitere Erweiterungsmodule werden werden zwei einachsige, um die globale X-Achse 3 vorne und/oder hinten schwenkbare Vorrichtungen in Form von Einradanhängevorrichtungen 49, mit je einem Hifsrad 48 oder einer beliebigen Rotationsvorrichtung 14 vorne und hinten, dargestellt. Die Hilfsräder 48 sind beweglich oder fest über die Basismodulverbindungsvorrichtung 44 oder direkt mit dem Basismodul 16 verbunden. Jeweils ein Hilfsrad 48 oder kein Hilfsrad 48 berührt den Boden 12. Zur Regulierung des Seitenneigungswinkels 97 kann die Sänfte 46 mindestens eine um die Energiespeicherschwenkachse 130 schwenkbare Energiespeichervorrichtung 39 aufweisen. Der Radkörper 37 und der Radreifen 38 werden in dieser Ansicht in Form eines von mindestens sechs Radkörpersegmenten 50 und Radreifensegmenten 51 mit mindestens zwei linearkinematischen Vorrichtungen 27 pro Radreifensegment 51 in der Funktion als Streben 32 dargestellt. Die Verbindung der Radkörpersegmenten 50 mit Radreifensegmenten 51 untereinander, sowie die Verbindung der linearkinematischen Vorrichtungen 27 mit dem Rotor 36 und den Radkörpersegmenten 50, erfolgt über Radkörpergelenke 131 mit mindestens einem Freiheitsgrad. Bei entsprechender radialer Ausrichtung der Radmodule 33 zueinander lässt sich dadurch das Radkörpervolumen bei Bedarf automatisch reduzieren. Durch entsprechende Veränderung der Linearpositionen der linearkinematischen Vorrichtungen im Zusammenhang mit den Radkörpergelenken 131 mit eingeschränkten Freiheitsgraden, wobei die Linearpositionen der gegenüberliegenden linearkinematische Vorrichtungen 27 nicht identisch sind. Bei mehr als zwei linearkinematischen Vorrichtungen 27, beispielsweise bei einer parallell<inemtischen Strebenverbindung, können die Radkörpersegmente 50 über Schnellverschlusskupplungen voneinader getrennt werden. Eine kinematische Radl<örperverbindung ermöglicht unter anderem die Anwendung eines automatischen Einklappmechanismus zwecks Volumenreduktion der Radkörper 37, eine nicht runde Radkörpergeometrie zwecks raupenähnlicher Fortbewegung in unebenem Gelände, oder eine automatische Zerlegung der Vorrichtung.

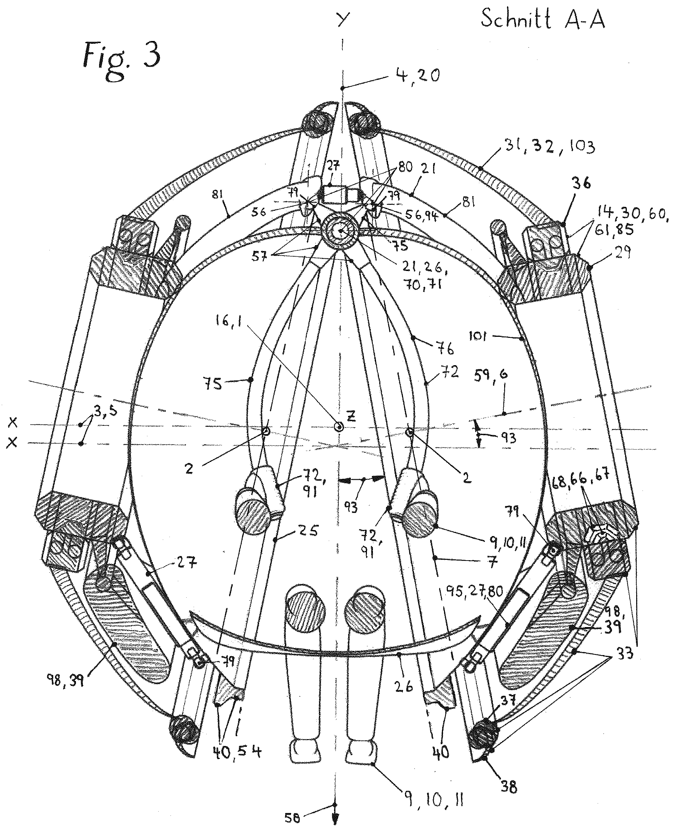

Figur 3 stellt ein seriell kinematisches Basismodul 16 mit seitlich um die lokalen X-Achsen der Radmodule 33 schwenkbar verbundenen Energiespeichervorrichtungen 39 zur Fortbewegung einer Person 9 in einer Schnittansicht A-A in der A-Radwinkelposition von hinten dar.

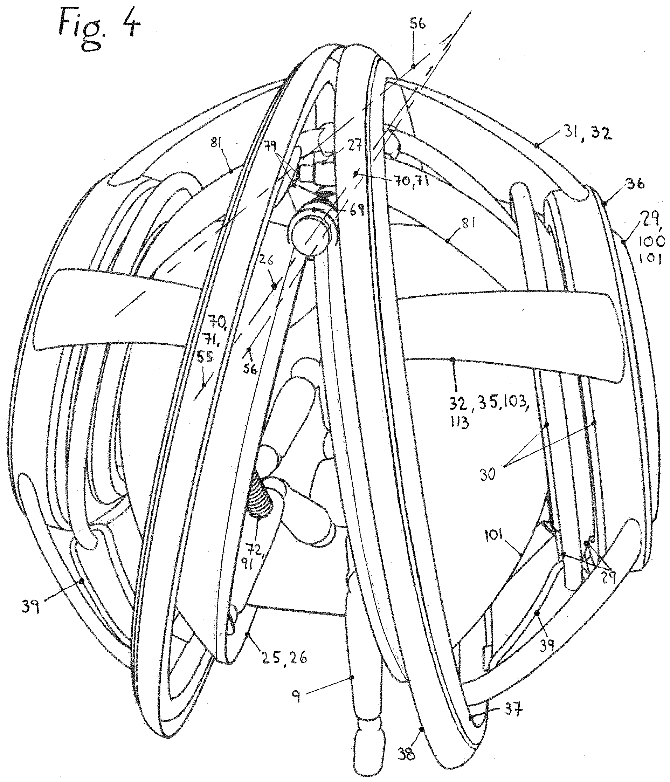

Figur 4 stellt ein seriell kinematisches Basismodul 16 zur Fortbewegung einer Person 9 im Raum seitlich von vorne dar.

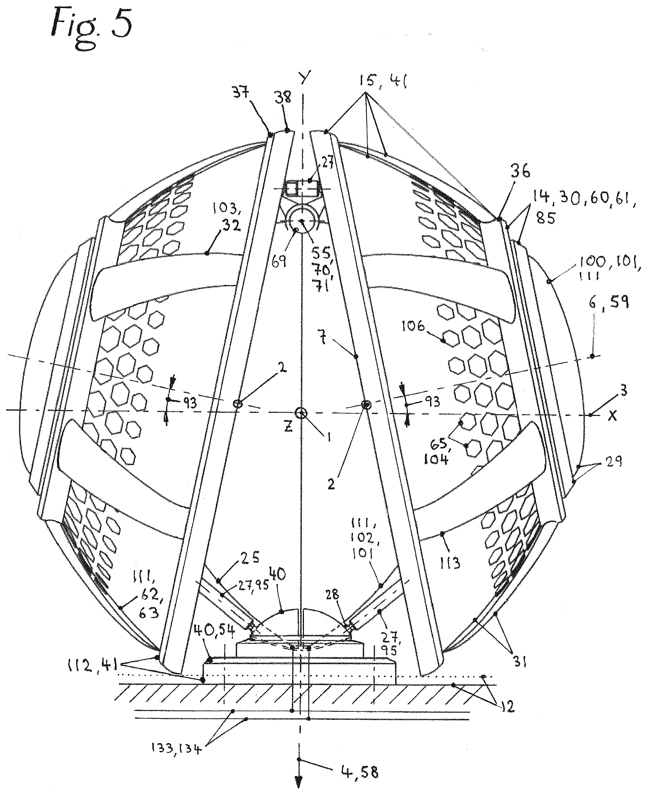

Figur 5 stellt ein seriellkinematisches Basismodul 16 mit einer zentralen Bodenverbindungsvorrichtung 54, mit zusätzlicher Funktion als Trackervorrichtung 41 zur Nutzung der Sonnen- und Windenergie, in der A-Radwinkelposition von vorne dar.

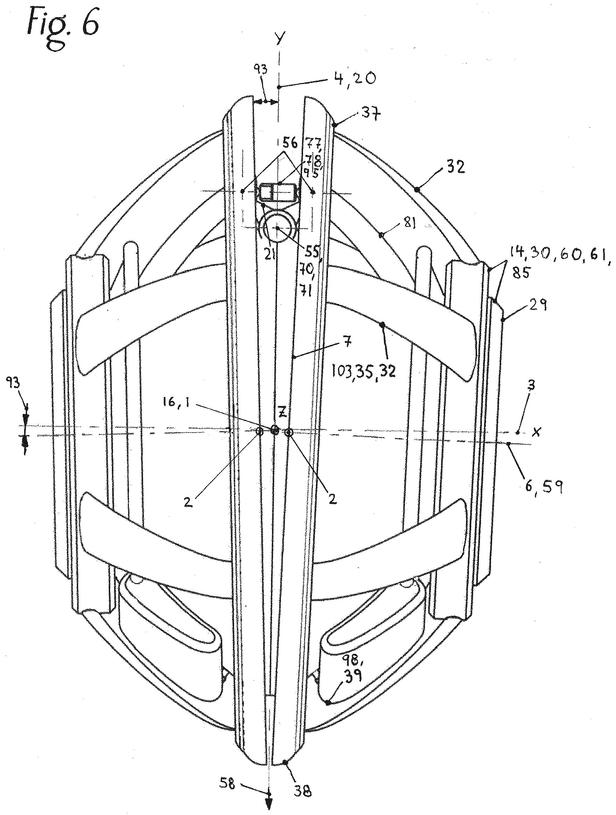

Figur 6 stellt ein seriell kinematisches Basismodul 16 in der V-Radwinkelposition von vorne dar.

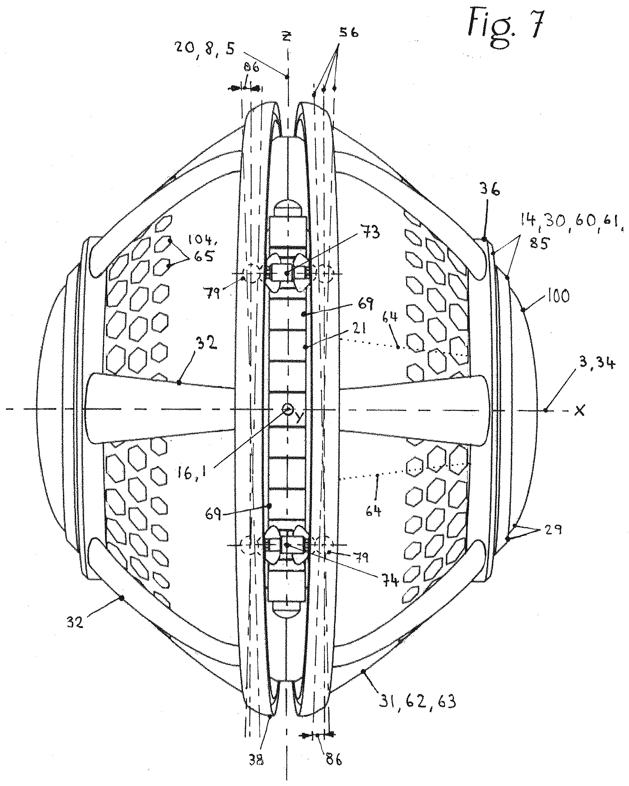

Figur 7 stellt ein seriellkinematisches Basismodul 16 in der V-Radwinkelposition von oben, mit Hauptverbindungsachse 55 und zwei Seitenverbindungsachsen 56, die bei paralleler Position der Radmodule 33 parallel zueinander, und während einer Transformation durch ein Schleppverfahren einer, oder beider Schervorrichtungen 57 in entgegengesetzter Richtung, nicht parallel zueinander verlaufen, dar.

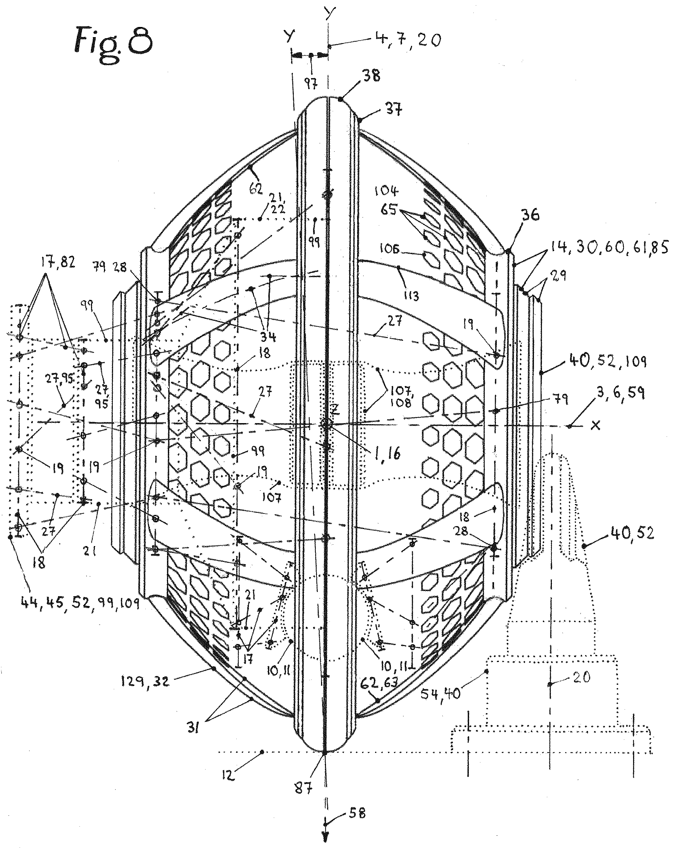

Figur 8 stellt ein beliebig kinematisches oder parallelkinematisches Basismodul 16 in der I-Radwinkelposition von vorne dar. Die Figur zeigt symbolisch mehrere gestapelte und verschachtelte Anordnungsvarianten parallelkinematischer Vorrichtungen 17 zum Betreiben des Basismodules 16, sowie zwei parallelkinematische Vorrichtungen 17 mit einem Aktionsradius um die globale X-Achse 3 von 360° zwecks Verrichtung einer beliebigen Arbeit. Als Erweiterungsmodul wird eine seitlich verbundene Bodenverbindungsvorrichtung 54 zur Verbindung von zwei Basismodulen 16 mit zusätzlicher Funktion als Trackervorrichtung 41, dargestellt.

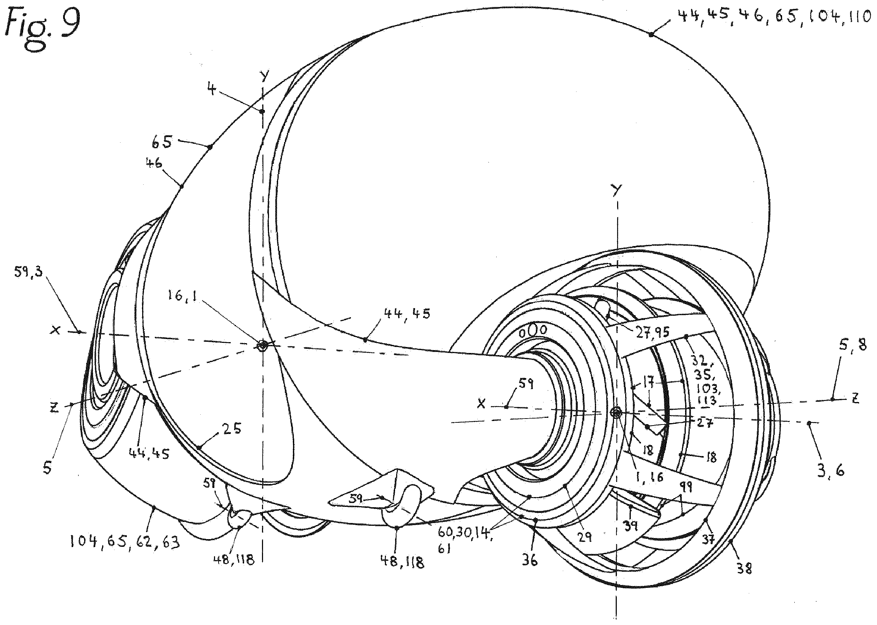

Figur 9 stellt eine Vorrichtung mit zwei paralellkinematischen Basismodulen 16 unterschiedlicher Grösse mit einer Sänfte 46 dar. Die Sänfte 46 ist über Statorfestverbindungen 99 mittels Schnellverschlusskupplungen direkt mit der inneren parallelkinematischen Plattform 18 der Basismodule 46 verbunden, und kann automatisch ab- oder angedockt, und, mittels der Hilfsräder 48, auch mit nur einem Basismodul 16, bewegt werden.Die Begriffe und Funktionen werden nachfolgend beschrieben.

### Geometrie

Im Unterschied zu einer Verbindung zweier Rotationsvorrichtungen 14 seriell hintereinander, beispielsweise bei einem konventionellen Fahr- oder Motorrad mit einer Lenkgeometrie durch eine Fahrspur, sind die zwei Rotationsvorrichtungen 14 bei der vorliegenden Erfindung parallel nebeneinander angeordnet.

Das globale Koordinatensystem 1 des Basismoduls 16 wird in der Winkelreferenzposition durch die X-Achse als Rotationsachse 59 der Rotationsvorrichtungen 14, durch die Y-Achse als Symmetrieachse 20 und Senkrechte zur Gravitationskraft 58, und durch die Z-Achse als Fortbewegungsrichtung am Boden 12, definiert.

Die lokalen Koordinatensysteme 2 der Rotationsvorrichtungen 14 werden in der Winkelreferenzposition durch die X-Achse als Rotationsachse 59, durch die Y-Achse rechtwinklig zur Rotationsachse 59, und durch die Z-Achse als Fortbewegungsrichtung am Boden 12, definiert.

### Aufbau/Funktion

Die Vorrichtung besteht aus mindestens einem Basismodul 16 mit mindestens zwei aktiven oder passiven Rotationsvorrichtungen 14, nachfolgend auch Radmodule 33 genannt, deren Statoren 29 direkt und/oder indirekt über mindestens eine beliebige seriellkinematische, parallel kinematische und/oder beliebig kinematische Statorverbindungsvorrichtung 21 miteinander verbunden sind.

Die Radmodule 33 können grundsätzlich von aussen und/oder von innen mechanisch miteinander verbunden sein. Durch eine Verbindung der Radmodule 33 von innen entsteht ein geschlossenes Fortbewegungssystem.

Die Statorverbindungsvorrichtung 21 kann die Statoren 29 direkt und/oder indirekt über mindestens eine Statordistanzvorrichtung 22 miteinander verbinden.

Die Statorverbindungsvorrichtung 21 kann die Statoren 29 direkt und/oder indirekt über eine beliebige Statordistanzvorrichtung 22 und/oder Lastträgervorrichtung 26 mit dem Lastkörper 11 verbinden.

Die Statordistanzvorrichtung 22 ermöglicht sowohl einen Zugangsradius von 360° des Lastkörpers 11 zum Basismodul 16 um die globale X-Achse, als auch einen Aktionsradius von 360° zur Verrichtung einer beliebigen Arbeit des Lastkörpers 11 innerhalb und/oder ausserhalb des Basismoduls 16 um die globale X-Achse 3. Der Lastkörper 11 kann grösser oder kleiner als die Vorrichtung sein.

### aktives Basismodul/Antriebsvorrichtungen/Motoren

Ein aktives Basismodul 16 besteht aus mindestens zwei aktiven Rotationsvorrichtungen 14. Eine aktive Rotationsvorrichtung 14, nachfolgend auch Motor 60 oder Antriebsvorrichtung 61 genannt, besteht aus mindestens einem Stator 29 und mindestens einem um die Rotationsachse 59 über eine beliebige Lagervorrichtung aktiv direkt oder indirekt angetriebenen Rotor 36.

Der Rotor 36 ist über eine beliebige Rotorverbindungsvorrichtung 31, nachfolgend auch Streben 32, Rotorstreben 35, Rotorschalen 62, Rotorganzschalen 63 oder Rotorschalensegmenten 64 genannt, über den Radkörper 37 mit dem Radreifen 38 und Boden 12 verbunden. Sie bilden zusammen ein aktives Radmodul 33.

Ein Basismodul 16 kann auch aus Radmodulen 33 mit nicht kreisförmiger Geometrie des Radkörpers 37, Radkörpersegmenten 50, oder ohne Radkörper 37 bestehen.

Aktive Rotationsvorrichtungen 14 können aus einfachen Antriebssystemen, wie lagerlosen elektrischen, hydraulischen oder pneumatischen Torquemotoren 30 mit Hohlwelle als Stator 29, gespeist durch netzbetriebene Energiespeichervorrichtungen 39 mit Energierückführungssystem, und/oder aus Hybridantriebsystemen, kombiniert beispielsweise mit einem manuellen Ganzkörperantrieb, und/oder aus Multihybridantriebsystemen, die zur lokalen Energiegewinnung zusätzlich Sonnen- und/oder Windenergie über Energieumwandlungsvorrichtungen 65 nutzen, bestehen.

### Torquemotor

Bei den vorliegenden Anwendungsbeispielen werden als Antriebsvorrichtungen 61 direkt angetriebene, lagerlose oder beliebig gelagerte Torquemotoren 30 mit Hohlwelle in Form von Aussenläufermotoren verwendet. Bei der Anwendung eines elektrischen lagerlosen Torquemotors 30 ist der Stator 29 mit dem Rotor 36 über eine berührungslose Magnetlagervorrichtung 66 mit permanentmagnetischen und/oder elektromagnetischen Aktoren 67 verbunden. Die Motoren 60 können wasserdicht und/oder wasserunempfindlich und elektrisch abgeschirmt sein. Die Aktoren 67 sind in der Funktion als Antriebsvorrichtung 61 und als Lagervorrichtung 68 parallel kreisförmig, und im Winkel von 45° um die lokale X-Achse angeordnet. Die Energieimpulse vom Stator 29 auf den Rotor 36 bei positiver Beschleunigung, und vom Rotor 36 auf den Stator 29 bei negativer Beschleunigung, zwecks Energierückgewinnung, können im Verhältnis 1/1, ohne Übersetzung, bis zu einem entsprechenden ganzzahligen Teiler der Aktoren im Verhältnis 1/X mit maximaler Übersetzung, in Form einer elektrischen Impulsübersetzung, auf die Aktoren 67 übertragen werden. Eine Hohlwelle ermöglicht unter anderem eine beliebige mechanische Verbindung einer beliebigen Vorrichtung seitlich eines Basismoduls 16 innerhalb des Stators 29 mit der Lastträgervorrichtung 26, der inneren parellelkinematischen Plattform 18 und/oder direkt mit dem Lastkörper 11. Bei entsprechendem Durchmesser des Radmoduls 33 ist damit auch ein seitlicher Zugang des Lastkörpers 11 oder Personen 9 zur Lastträgervorrichtung 26 möglich.

### manueller Ganzkörperantrieb

Ein manueller Ganzkörperantrieb ist unter anderem in Form einer stationären Laufvorrichtung, die die Energie des biomechanischen Laufzyklus von Armen und Beinen in natürlichen Geh- und/oder Laufbewegungen auf die Antriebsvorrichtungen übertragend, direkt, oder indirekt übersetzt, möglich. Der Ganzkörperantrieb kann aus vier, mit der Statorverbindungsvorrichtung 21 verbundenen, parallelkinematisch hydraulischen und/oder pneumatischen Antriebsvorrichtungen für Arme und Beine bestehen, die die Energie mittels einem hydraulischen Verteilersystem über verschiedene radiale Positionen direkt, übersetzt und/oder untersetzt auf die hydraulischen oder pneumatischen Torquemotoren 30 übertragen. Bei hydraulischen oder pneumatischen Torquemotoren 30 kann der Antrieb durch eine zusätzliche zentrale Antriebsvorrichtung in Form einer hydraulischen oder pneumatischen Pumpvorrichtung zu einem hybriden Antrieb ergänzt werden. Die differenziale Verteilung des Öl- oder Luftvolumens auf die Torquemotoren 30 ermöglicht über eine entsprechende Ventiltechnik eine präzise Lenkung, Antrieb und Energierückgewinnung der Vorrichtung. Die drei Freiheitsgrade der parallelkinematischen Plattformen ermöglichen es, das Basismodul 16 mit entsprechender hydraulischer und/oder elektrischer Ventilregel- und/oder Verstärkertechnik ohne weitere elektronische Steuerung intuitiv sowohl manuell anzutreiben, den Transformationsprozess zu steuern, als auch zu lenken.

### passives Basismodul

Ein passives Basismodul besteht aus mindestens zwei passiven Rotationsvorrichtungen. Eine passive Rotationsvorrichtung besteht aus mindestens einem statischen und einem um die Rotationsachse 59 über eine beliebige Lagervorrichtung verbundenen rotierenden Teil.

Passive Rotationsvorrichtungen können beispielsweise durch beliebige Antriebsvorrichtungen über den Boden 12, wie bei einer Anwendung in Kombination mit einer weiteren erfindungsgemässen Vorrichtung, oder bei einer Anwendung als Vorderradvorrichtung bei einem konventionellen Motorrad mit seriell hintereinander angeordneten Rotationsvorrichtungen, angetrieben werden.

### seriellkinematische Statorverbindungsvorrichtung

Bei einem Basismodul 16 mit mindestens einer seriellkinematischen Statorverbindungsvorrichtung 21, dargestellt in den Figuren 2, 3, 4, 5, 6, und 7, sind die beiden Radmodule 33 mit der Statorverbindungsvorrichtung 21 hierarchisch verbunden.

Ein Basismodul 16 mit einer seriellkinematischen Statorverbindungsvorrichtung 21 wird auch seriellkinematisches Basismodul 16 genannt. Ein seriellkinematisches Basismodul 16 kann aus einer, zwei, drei oder mehreren gestapelten und/oder verschachtelten seriellkinematischen Vorrichtungen, bestehen.

Der Lastkörper 11 ist über die Lastträgervorrichtung 26 in Form einer Hängevorrichtung fest oder kinematisch über eine Scharniervorrichtung 69 mit der Hauptverbindungswelle 70 auf der Hauptverbindungsachse 71 verbunden. Eine vordere, als Steuerhebel 72 verlängerte Schervorrichtung 73 und eine hintere Schervorrichtung 74, mit jeweils mindesten einem linken Scherschenkel 75 und einem rechten Scherschenkel 76, verbinden die beiden Seitenverbindungsachsen 56 mit der Hauptverbindungsachse 55 über eine Gelenkvorrichtung mit mindestens einem Freiheitsgrad.

Die Hauptverbindungsachse 55 bildet den Drehpunkt der Scherschenkel 76. Beide Seitenverbindungsachsen 56 der Schervorrichtungen 74 sind mit je einer linearkinematischen Vorrichtung 27, nachfolgend auch Zylindervorrichtung 77 genannt, mit zusätzlicher Funktion als Stossdämpfer 78, direkt miteinander über Kugelgelenke 79 verbunden.

Jedes Radmodul 33 ist über eine obere seriellkinematische Verbindungsvorrichtung 80 schwenkbar um die Seitenverbindungsachsen 56 und über eine untere linearkinematischen Vorrichtung 27 mit der Lastträgervorrichtung 26 verbunden. Diese geometrische Anordnung eines Radmoduls 33 entspricht einer Dreipunktverbindung.

Jeder Stator 29 ist direkt oder über mindestens eine Statorstrebe 81 mittels Kugelgelenken 79 schwenkbar um die Seitenverbindungsachse 56 mit der Lastträgervorrichtung 26 verbunden.

### parallelkinematische Statorverbindungsvorrichtung

Bei einem Basismodul 16 mit mindestens einer parallelkinematischen Statorverbindungsvorrichtung 21 sind die Statoren 29 über mindestens eine parallelkinematische Vorrichtung direkt und/oder über eine beliebige Statorverbindungsvorrichtung 21 miteinander verbunden.

Ein Basismodul 16 mit einer parallelkinematischen Statorverbindungsvorrichtung 21, wie in Figur 1, 2 und 8 symbolisch dargestellt, wird nachfolgend auch parallelkinematisches Basismodul 16 genannt. Ein parallelkinematisches Basismodul 16 kann, wie in Figur 8 dargestellt, beispielsweise aus einer, zwei, drei, oder mehreren gestapelten parallelkinematischen, als Statorverbindungsvorrichtung 21, und mindestens einer verschachtelten parallelkinematischen Vorrichtungen 17, zur Verrichtung einer beliebigen Arbeit, bestehen.

Die parallelkinematische Vorrichtung besteht aus mindestens zwei parallelkinematischen Plattformen 18, die über mindestens drei beliebig kinematische Vorrichtungen, wie linearkinematische Vorrichtungen 27 über beliebige Gelenkverbindungen, wie Kugelgelenkverschlussvorrichtungen 28, miteinander verbunden sind. Die linearkinematischen Vorrichtungen 27 können beispielsweise aus linearen elektrischen, hydraulischen und/oder pneumatischen kinematischen Vorrichtungen bestehen. Bei einem Hexapod 82 besteht die parallel kinematische Vorrichtung 17 aus sechs linearkinematischen Vorrichtungen 27.

Bei dem vorliegenden parallelkinematischen Anwendungsbeispiel in Figur 1 wird ein parallelkinematisches Basismodul 16 mit zwei parallelkinematischen Vorrichtungen 17 dargestellt. Die beiden inneren parallelkinematischen Plattformen 18 sind fest mit der Statorverbindungsvorrichtung 21 verbunden und entsprechen der globalen Y-Achse. Eine zusätzliche Schwenkvorrichtung 83 in mindestens einem Freiheitsgrad, nachfolgend auch Plattformschwenkvorrichtung 84, ermöglicht einen variablen Winkel zwischen den beiden inneren parallelkinematischen Plattformen 18.

Die parallelkinematischen Plattformen 18 sind über Kugelgelenkverschlussvorrichtung 28 mit mehreren Freiheitsgraden mit den linearkinematischen Vorrichtungen 27 verbunden. Dabei ist auf jeder Seite mindestens eine der parallelkinematischen Plattformen 18 direkt oder indirekt über mindestens einen Stator 29 mit mindestens einer Rotationsvorrichtung 14 verbunden. Das Koordinatensystem der äusseren parallel kinematischen Plattform 18 kann dem lokalen Koordinatensystem der Rotationsvorrichtung 14 entsprechen.

Das parallelkinematische Basismodul 16 dient nachfolgend als Referenzvorrichtung der Beschreibung.

### Modulare Verschachtelung/mechanische Vernetzung

Die Vorrichtung kann anwendungsabhängig mit beliebigen Modulen grösser und/oder kleiner als das Basismodul 16 erweitert werden. Die Radmodule 33 und die Statorverbindungsvorrichtungen 21 können anwendungsabhängig aus je einem Modul oder aus mehreren beliebig verschachtelten, und/oder gestapelten, verketteten und/oder beliebig zwei- oder dreidimensional vernetzten Modulen mit beliebiger serieller und/oder parallelkinematischer Verbindungen, zwecks Kombinationen unterschiedlichster Funktionen auf engstem Raum, bestehen. Das Prinzip der Verschachtelung und/oder der Stapelung vernetzter Module kann mit dem Aufbau einer molekularen Struktur verglichen werden. Ein oder mehrere Basismodule 16 können beliebig manuell und/oder automatisch mit gleichen oder beliebigen Erweiterungsmodulen, und/oder beliebigen Vorrichtungen innerhalb oder ausserhalb des Basismodules 16 verbunden werden. Die Vorrichtung kann aus einer oder mehreren gleichen und/oder unterschiedlichen Statorverbindungsvorrichtungen 21 bestehen.

### Fortbewegung/Bremsverfahren am Boden/Energierückgewinnung

Die Fortbewegung eines Basismoduls 16 am Boden 12 erfolgt durch positive oder negative Beschleunigung oder konstanter Geschwindigkeit der Antriebsvorrichtungen 61. Bei einer geradlinigen Fortbewegung sind die Geschwindigkeiten der Antriebsvorrichtungen identisch. Bei einer Richtungsänderung können die Geschwindigkeiten differenzial variieren. Das differenziale Fortbewegungsverfahren kann Bestandteil des Lenkverfahrens sein.

Die negative Beschleunigung der Vorrichtung in Form eines Bremsverfahrens kann beispielsweise durch Bremsvorrichtungen mittels mechanisch hydraulischer Scheibenbremsen und/oder durch Energierückgewinnungssysteme mittels der Motoren 60 in der Funktion als Generatoren 85 erfolgen.

### Lenkverfahren mit kontaktlosen oder gleitend verbundenen Radkörpern

Die Vorrichtung ermöglicht für das Spurhalten und für Richtungsänderungen mehrere unterschiedliche Methoden zur Lenkung des Basismoduls 16 bei einer Fortbewegung am Boden 12. Als Lenkverfahren können anwendungsabhängig eine oder mehrere Lenkverfahren in Kombination angewendet werden.

Bei einer Radwinkelposition ohne, und/oder punktuell oder flächig gleitenden Verbindung der beiden Radreifen 38, Radkörper 37 und/oder Radmodulen 33, kann das Lenkverfahren durch eine oder mehrere der nachfolgenden Lenl<methoden erfolgen.

Das Lenkverfahren kann als Bestandteil des Beschleunigungs- und des Bremsverfahrens durch differenziale Beschleunigungswerte der beiden Radmodule 33 mechanisch, hydraulisch, pneumatisch und/oder elektrisch über die Lenkvorrichtung und/oder elektronisch in Form positiver, negativer oder keiner Beschleunigung erfolgen. Bei den Bremsverfahren durch negative Beschleunigung kann es sich um Energie rückgewinnende und/oder mechanische Bremsverfahren handeln. Die Trägheit des Lenkverfahrens hängt vom gyroskopischen Effekt durch die Rotationsgeschwindigkeit, sowie von der Radwinkelposition, die die Hebelkraft der Radmodule 33 um die globale Y-Achse 4 beeinflusst, ab.

Bei einem parallelkinematischen Basismodul 16 oder bei einem Basismodul 16 mit entsprechender seriellkinematischer Geometrie kann das Lenkverfahren durch das Schwenken der Radmodule 33 um die lokalen Y-Achsen mit entsprechender Spurkorrektur erfolgen. Bei einer Spurkorrektur befinden sich die lokalen X-Achsen nicht mehr auf gleicher Höhe. Die beiden Radmodule 33 sind entlang der globalen Z-Achse mit unterschiedlichen lokalen Y-Winkeln hintereinander versetzt, wodurch eine lenkgeometrische Fahrspur entsteht.

Diese Lenkmethode wie auch das Transformationsverfahren des Basismoduls 16 kann mit einer Spuränderung beim Skifahren verglichen werden. Dabei entsprechen die Längsachsen der beiden Ski den lokalen Z-Achsen der Radmodule 33 und somit der Fortbewegungsrichtung bei paralleler Y-Position der Radmodule 33. Bei paralleler Y-Position der Radmodule 33 entspricht der Schleppwinkel 86 0°. Die Bodenberührung der Ski entspricht den Bodenberührungspunkten 87 der Radreifen 38. Das Tranformationsverfahren kann kontinuierlich am Boden oder sprunghaft erfolgen.

### Lenkverfahren mit fest verbundenen Radkörpern

Bei einer Radwinkelposition mit fester, flächiger Verbindung der beiden Radreifen 38, Radkörper und/oder Radmodulen 33, wie beispielsweise bei der I-Radwinkelposition als wasserdichtes Basismodul 16, oder bei der V-Radwinkelposition, kann das Lenkverfahren durch eine oder mehrere der nachfolgenden Methoden erfolgen.

Das Lenkverfahren kann durch beliebige gyroskopische Vorrichtungen, durch Positionsänderungen der Energiespeichersegmente 88 als Exzentervorrichtungen 89 zur Nutzung der Zentrifugal- und Zentripetalkräfte, die, abhängig von der radialen Position des Radmodules 33, entlang der Exzenterverlaufsachse 90 kinematisch mit der Streben 32 verbunden sind, oder mittels manueller und/oder kinematischer Stoss- und/oder Zugkraftimpulsen der seitlich um die lokale X-Achse 6 mit dem Stator 29 schwenkbar verbundenen Energiespeichervorrichtungen 39 auf den Hebel der globalen X-Achse 3 um die globale Y-Achse 4 und/oder auf die Schervorrichtungssteuerhebel 91 um die globale Y-Achse 4, erfolgen.

Bei einer Fortbewegung mit dichtem geschlossenem Basismodul 16, und/oder mit dichter Statorverbindungsvorrichtung 21 und beliebig offenem Basismodul 16 innerhalb eines Mediums, wie beispielsweise Wasser, und/oder schwimmend auf dem Wasser in der Position mit senkrechter globaler Y-Achse 4 und tiefem Schwerpunkt, kann das Lenkverfahren durch differenziales Verändern der radialen Strebenpositionen der Radmodule 33 um die Strebenlängsachse 92, erfolgen.

Lenkverfahren mit fest verbundenen Radmodulen 33 können auch bei losen Radmodulen angewendet werden.

Bei mindestens einem weiteren, seriell angeordneten Radmodul 33, kann das Lenkverfahren durch eine konventionelle Lenkgeometrie mit Fahrspur erfolgen.

### Transformation/Schleppverfahren/Radwinkel

Das Schleppverfahren ist Gegenstand der vorliegenden Erfindung und beschreibt den Transformationsprozess der Vorrichtung zwecks Veränderung der Form, der Funktion und der Eigenschaften der Vorrichtung während der Fortbewegung. Bei den vorliegenden Anwendungsbeispielen in den Figuren 1 und 3 bis 7 erfolgt die Transformation des Basismoduls 16 von einem parallelen Zweirad in ein Einrad und/oder von einem Einrad in ein paralleles Zweirad. In der Figur 2 erfolgt die Transformation bei synchronisierter Transformation zweier Basismodule 16 mit Basismodulverbindungsvorrichtung 44 von einem konventionellen Vierrad in ein konventionelles Zweirad und/oder von einem konventionellen Zweirad in ein konventionelles Vierrad. Bei der Transformation nur eines Basismodules 16 erfolgt die Transformation von einem Dreirad in ein Zweirad und/oder von einem Zweirad in ein Dreirad.

Der Radwinkel 93 mit dem Radwinkeldrehpunkt 94 beschreibt den Winkel und die Position der lokalen Y-Achsen 7 der Radmodule 33 zur globalen Y-Achse 4 und/oder zur Gravitationskraft 58. Beim Radwinkeldrehpunkt 94 kann es sich bei einer seriellkinematischen Verbindung um eine Seitenverbindungsachse 56 handeln. Bei einer parallelkinematischen Verbindung kann es sich beim Radwinkeldrehpunkt 94 um den Nullpunkt 2 des lokalen Koordinatensystems des Radmoduls 33 oder um eine beliebige Position des parallelkinematischen Wirkungsbereichs handeln. Der Radwinkel 93 kann während der Fortbewegung durch Verändern des Schleppwinkels 86, dem theoretischen Winkel und der Position der lokalen Z-Achsen 8 der Radmodulen 33 zur globalen Z-Achse 5, variieren, und beispielsweise durch ein manuell kinematisches passives Schleppverfahren auf dem Boden 12, und/oder durch ein aktives Schleppverfahren mittels einer beliebig kinematisch automatisierten Vorrichtung, die einen proportional zur Fortbewegungsgeschwindigkeit abhängigen Bewegungsalgorithmus simuliert, zwecks Transformation, beispielsweise von einem Zweirad in ein Einrad, beeinflusst werden.

Die Transformation erfolgt durch eine geringfügige Unparallelität der Radmodule 33 und deren Y-Achsen zueinander mittels der parallelen und/oder seriellen Kinematik der Statorverbindungsvorrichtung 21. Bei einer seriellkinematischen Verbindung wird der vordere und/oder der hintere Winkel der Schervorrichtungen 57 verändert. Die untere linearkinematische Vorrichtung 27 bestimmt dabei den Abstand der Radmodule 33 zueinander und, abhängig von der Fortbewegungsgeschwindigkeit, die Dauer der Transformation. Bei einer parallelkinematischen Verbindung werden die äusseren parallelkinematischen Plattformen entsprechend positioniert. Durch die Fortbewegung am Boden 12 entsteht ein kurzzeitiges Schleppverfahren, das in der Folge die Spur vergrössert oder verkleinert.

Die Rotationsvorrichtungen 14 können sich während der Fortbewegung durch das Schleppverfahren punktuell tangential, und bei einer in Richtung globalen Nullpunkt 1 gewölbten Rotorverbindungsvorrichtung 31, flächig oder punktuell tangential berühren, und/oder über eine beliebige Verbindungsvorrichtung temporär fest und/oder dynamisch miteinander verbunden sein.

### seriellkinematisches Schleppverfahren

Bei einem seriellkinematischen Schleppverfahren zwecks Ändern des Radwinkels 93 bewegen sich die Radmodule um die lokalen Y-Achsen 7 passiv im Schleppverfahren. Bei der Verwendung eines Hydraulikzylinders 95, als untere linearkinematische Vorrichtung 27, wird der Ölfluss durch eine Ventiltechnik geöffnet und somit das Schleppverfahren ermöglicht. Beim Erreichen des Zielradwinkels wird der Ölfluss gestoppt.

### parallelkinematisches Schleppverfahren

Das Schleppverfahren bei der seriellkinematischen Statorverbindungsvorrichtung 21 kann auch bei einer parallelkinematischen Statorverbindungsvorrichtung 21, beispielsweise bei einer hydraulisch manuell gesteuerten Parallelkinematik, durch eine Regeltechnik bei Hydraulikventilen mit Kurvenscheibenregulierung, oder elektronisch anhand entsprechender Algorithmen, angewendet werden.

### Referenzpositionen Radwinkel/gyroskopischer Effekt/Selbststabilisierung

Die Vorrichtung kann durch das Transformationsverfahren geometrisch unterschiedliche Referenzwinkelpositionen sowie beliebige Positionen innerhalb des kinematischen Wirkungsbereichs einnehmen. Dadurch sind verschiedene Positionen und Winkelpositionen der Radmodule 33 zur globalen Y-Achse 4 möglich. Die Referenzwinkelpositionen der geometrischen Anordnung der Radmodule 33 werden bei identischen Radwinkeln 93 nachfolgend Radwinkelposition genannt.

Der Zeitpunkt einer Transformation hängt unter anderem von der Stärke des gyroskopischen Effektes, auch Zwirbeleffekt genannt, ab. Der gyroskopische Effekt beschreibt die Selbststabilisierung der um die lokale X-Achse 6 rotierenden Masse der Vorrichtung. Die Stärke des Effektes hängt unter anderem von der Rotationsgeschwindigkeit der Radmodule 33 und der radialen Verteilung der Masse ab. Die Anordnung der Masse, beispielsweise in Form von Energiespeicher und/oder Energiespeichersegmenten 88, kann bei der vorliegenden Vorrichtung während der Rotation der Radmodule verändert werden.

Die A-Radwinkelposition stellt das Basismodul 16 mit einem positiven Radwinkel 93 als Zweirad stehend oder bei relativ langsamer Fortbewegung bis zur Geschwindigkeit der Selbststabilisierung der Vorrichtung, dar.

Die H-Radwinkelposition stellt das Basismodul 16 mit einem Radwinkel 93 von 0° stehend oder bei relativ langsamer Fortbewegung bis zur Geschwindigkeit der Selbststabilisierung der Vorrichtung, dar. Die H-Radwinkelposition entspricht einer Position der Radmodule 33 als, durch eine Distanz zwischen den Radmodulen 33, geöffnetes Basismoduls 16 mit parallel zum Boden verlaufenden lokalen X-Achsen 6. Die lokalen Y-Achsen 7 verlaufen senkrecht zum Boden und entsprechen der Gravitationskraft. Die lokalen Z-Achsen 8 und lokalen Y-Achsen 7 verlaufen parallel zueinander. Die lokalen X-Achsen 6 entsprechen der globalen X-Achse 3 des Basismoduls 16.

Die V-Radwinkelposition stellt das Basismodul 16 mit einem negativen Radwinkel 93, bei nicht fester Verbindung der Radmodule 33 als differenzial lenkbares Zweirad, oder fester, punktueller Verbindung der Radmodule 33 mit den Fortbewegungseigenschaften eines Einrades, ab einer Geschwindigkeit der Selbststabilisierung der Vorrichtung, dar.

Die I-Radwinkelposition stellt das Basismodul 16 mit einem Radwinkel 93 von 0°, bei nicht fester Verbindung der Radmodule 33 als differenzial lenkbares Zweirad, oder fester, flächiger Verbindung der Radmodule 33 mit den Fortbewegungseigenschaften eines Einrades, ab einer Geschwindigkeit der Selbststabilisierung der Vorrichtung, dar. Eine flächig feste Verbindung der Radmodule 33 entspricht einem geschlossenen Basismodul 16. Die Verbindung kann zum Trennen mehrerer Medien voneinander verwendet werden. Bei der I-Radwinkelposition können die lokalen Y-Achsen 7 und Z-Achsen 8 der Radmodule 33, abhängig von der Bauweise des Basismoduls 16 und der Form des Radreifens 38, identisch sein.

Die T-Radwinkelposition in Figur 1 stellt symbolisch nebst einer V-Radwinkelposition eine parallel kinematische Position eines Radmoduls 33 mit einem Radwinkel 93 von 90° stehend oder rollend der Statorverbindungsvorrichtung 21 auf dem Boden 12, dar. Die Radwinkelposition von mindestens 90° kann unter anderem bei einer Verwendung der Radmodule 33 als horizontale Rotationsvorrichtung 14 bei einer vertikalen und/oder horizontalen Fortbewegung in der Luft in Form einer zweirotorigen Hubschraubvorrichtung und/oder als Solartrackervorrichtung zur Anwendung kommen.

Die Radwinkel 93 können, ohne Einfluss von Seitenkräften in Richtung globaler X-Achse 3, bei einer geradlinigen Fortbewegung identisch sein. Bei einer geradlinigen Fortbewegung auf schiefer Ebene, bei einer Fortbewegung durch Richtungsänderung, sowie beim Einfluss von Seitenkräften, beispielsweise in Form von Seitenwind, können die Radwinkel 93 unterschiedliche Werte aufweisen.

Die Vorrichtung kann auch Radwinkelpositionen zwischen den beschriebenen Referenzwinkelpositionen einnehmen. Eine Anwendung muss nicht alle erwähnten Radwinkelpositionen einnehmen können. Der Übergang der Radwinkelpositionen und das Transformationsverfahren können in Abhängigkeit der Fortbewegungsgeschwindigkeit stufenlos am Boden 12 und/oder durch kurzzeitiges Anheben einer Radmodulseite schrittweise, beispielsweise durch ein algorithmisches Balancieren der parallel kinematischen Vorrichtungen, erfolgen. Die Winkel der Referenzwinkelpositionen hängen von der Anwendung ab.

### Längsneigungswinkel/Seitenneigungswinkel

Der Längsneigungswinkel 96 und der Seitenneigungswinkel 97 bestimmen die Winkelposition des Lastkörpers 11 zum globalen Koordinatensystem 1 des Basismoduls 16 und/oder die Position des globalen Koordinatensystems 1 zur Gravitationskraft 58.

Der Längsneigungswinkel 96 lässt sich durch Schwenken massereicher Vorrichtungen wie Energiespeichervorrichtungen 39, anwendungsbedingt der Lastträgervorrichtungen 26 und/oder des Lastkörpers 11, um einen oder mehrere Freiheitsgrade beeinflussen. Der Längsneigungswinkel bezieht sich mindestens auf die globale Z-Achse der Vorrichtung zur Gravitationskraft. Der Einfluss des Längsneigungswinkels 96 auf die Vorrichtung kann sich unter anderem bei einem positiven oder negativen Beschleunigungsverfahren, bei der Nivellierung des Lastkörpers, als auch bei der Verrichtung einer beliebigen Arbeit, vorteilhaft auswirken.

Der Seitenneigungswinkel 97 entspricht der globalen Y-Achse 4 der Vorrichtung zur Gravitationskraft 58. Der Seitenneigungswinkel 97 kann sich aus den beiden Radwinkeln 93 des Basismoduls 16 und/oder durch Gewichtsverlagerung in einer Kurve ergeben. Die Radwinkel 93 können bei einem Seitenneigungswinkel 97 grösser oder kleiner Null unterschiedliche Werte aufweisen. Der Seitenneigungswinkel 97 lässt sich bei einer parallelkinematischen Statorverbindungsvorrichtung 21 in allen Freiheitsgraden, und bei einer seriell kinematischen Statorverbindungsvorrichtung 21 in den entsprechenden Freiheitsgraden, durch unterschiedliche Radwinkel 93 beeinflussen.

Der Längsneigungswinkel 96, Seitenneigungswinkel 97 und die Radwinkel 93 können positive oder negative Werte aufweisen.

### Steuerung und Nivellierung durch kinematische Energiespeichervorrichtungen

Die Vorrichtung kann unter anderem durch das impulsive oder konstante Verschieben von Masse beliebiger Komponenten gesteuert und nivelliert werden. Dies kann unter anderem bei einer festen Verbindung der Radmodule 33 der Fall sein. Die Motoren 60 werden durch eine oder mehrere beliebige massereiche Energiespeichervorrichtungen 39 gespeist. Es können eine oder mehrere Energiespeichervorrichtungen 39 beliebig kinematisch schwenkbar hintereinander und/oder nebeneinander um die lokalen und/oder globalen X-Achsen mit den Rotoren 36 und/oder den Statoren 29 der Radmodulen 33 und/oder mit der Statorverbindungsvorrichtung 21 verbunden sein.

Die Energiespeichervorrichtungen 39 können an einer oder mehreren Positionen fest oder beliebig kinematisch mit den Statoren 29 und/oder den Rotoren 36 des Basismoduls 16 oder beliebigen Modulen, wie Basismodulverbindungseinrichtungen 44 oder Sänften 46, verbunden sein. Dadurch können gyroskopische, zentrifugale und/oder zentripetale Effekte, beispielsweise durch exzentrische Massenverschiebung auf rotierenden Teilen der Vorrichtung, Beeinflussung des Längsneigungswinkels 96 und/oder des Seitenneigungswinkels 97, und/oder durch das Bewegen von rotierenden Teilen der Vorrichtung, zwecks Krafteinwirkung auf das Basismodul 16, genutzt werden.

Diese Anordnungen können beispielsweise in der Funktion als Lenkverfahren, Transformationsverfahren, beliebige Steuerverfahren, und/oder zur Verrichtung einer beliebigen Arbeit, eingesetzt werden.

### Energiespeichervorrichtungen

Die Energiespeichervorrichtungen 39 können zur Speicherung von elektrischer Energie bei elektrischen Antriebsvorrichtungen 61 aus Akkumulatoren 98 bestehen. Bei hydraulischen oder hybriden Antriebsvorrichtungen 61 können die Energiespeichervorrichtungen 39 in Form eines hybriden Speichersystems aus einem oder mehreren hydraulischen Federdruckspeichern, beispielsweise zur Energierückführung der Bremsenergie, bestehen.

Die Energiespeichervorrichtungen 39 sind bei den vorliegenden Anwendungen sowohl direkt und/oder indirekt mit dem Rotor 36, als auch mit dem Stator 29 des Radmoduls 33 und/oder mit der Statorverbindungsvorrichtung 21 verbunden. Bei einem parallelkinematischen Basismodul 16 können die Energiespeichervorrichtungen mit den inneren und/oder äusseren parallelkinematischen Plattformen 18 verbunden sein. Bei der Energiespeichervorrichtung 39 kann es sich um eine oder mehrere Energiespeichersegmente 88 handeln.

### Statorverbindungsvorrichtung

Die Statorverbindungsvorrichtung 21 kann aus einem oder mehreren Teilen bestehen. Ein Teil kann aus der Lastträgervorrichtung 26 bestehen, die die Statorverbindungsvorrichtung mit dem Lastkörper 11 verbindet. Die Statorverbindungsvorrichtung 21 kann der Lastträgervorrichtung 26 als auch dem Lastkörper 11 entsprechen.

### Lastträgervorrichtung/Verschachtelung von Schalen

Der Lastkörper 11 kann über die Lastträgervorrichtung 26 fest und/oder beispielsweise über mindestens einen Freiheitsgrad kinematisch mit der Statorverbindungsvorrichtung 21 in Form einer inneren und einer äusseren Lastträgervorrichtung 26 verbunden sein. Dies ist beispielsweise zwecks radialer Nivellierung des seitlichen Gleichgewichts bei mehreren Personen 9 um die globale Y-Achse 4, zwecks Neigung des Lastkörpers 11, zwecks einem Aufrichtverfahren, und/oder zwecks Verrichtung einer beliebigen Arbeit, beispielsweise bei einer 180° Drehung der Lastträgervorrichtung 26 um die globale Y-Achse 4 zwecks Umkehr der Fortbewegungsrichtung ohne Drehen der Vorrichtung, in einem oder mehreren Freiheitsgraden möglich. Dadurch kann sich die Vorrichtung in beiden Richtungen der globalen Z-Achse 5 rollend am Boden 12 fortbewegen.

In Figur 1 wird ein Anwendungsbeispiel mit einer kugelförmigen, transparenten und bereichsweise teiltransparenten Lastträgervorrichtung 26, bestehend aus mehreren Kugelsegmenten mit unterschiedlichen Funktionen, dargestellt. Die Kugelsegmente bestehen aus Statorverbindungsvorrichtungen 21 in Form einer Statorfestverbindung 99, Türvorrichtungen 25 und Seitenfenstervorrichtungen 100.

Es können sowohl die äusseren als auch die inneren Lastträgervorrichtung 26 mit beliebig verschachtelten Verbindungsvorrichtungen wie einfache oder verschachtelte Rotorganzschalen 63 oder Rotorschalensegmenten 64, zwecks Verrichtung einer beliebigen Arbeit und/oder zwecks Trennung, Umwandlung, und/oder Reinigung unterschiedlicher Medien, Druck und/oder Temperaturzuständen, miteinander verbunden sein.

### Rotorverbindungsvorrichtungen

Mindestens zwei Rotoren 36 zweier Rotationsvorrichtungen 14 des Basismoduls 16 können jeweils direkt und/oder indirekt über beliebige Rotorverbindungsvorrichtungen 31, wie feste und/oder dynamische Rotorstreben 35, Rotorganzschalen 63, Rotorganzschalen 63 mit Einbuchtungen für kinematische Rotorstreben 35, Rotorschalensegmente 64, dynamische Vorrichtungen, bespannte Tuchvorrichtungen, und/oder beliebig kinematische Vorrichtungen, mit den Radkörpern 37 und Radreifen 38 verbunden sein. Der Nullpunkt der lokalen Y-Achse 7 eines Radmodules 33 kann dem Radreifen 38 auf der Position des Bodenberührungspunktes 87 entsprechen.

Die Rotorverbindungsvorrichtungen 31 können in beiden Richtungen entlang der lokalen X-Achse beliebig gewölbt, kugelförmig gewölbt, oder linear geformt sein. Bei einer linearen Rotorverbindungsvorrichtung entspricht die Y-Achse des Radkörpers 37 der Y-Achse des Rotors 36. Abhängig von der Konstruktion und der Anwendung können sich die Statoren 29 auch direkt berühren.

### Statorverbindungsvorrichtungen

Die Statoren 29 der Radmodule 33 sind über mindestens eine beliebige Statorverbindungsvorrichtung 21 miteinander verbunden. Die Statorverbindungsvorrichtung 21 kann aus einer oder mehreren festen und/oder kinematischen Statorstreben 81, Statorschale 101, Statorschalensegmenten 102, dynamischen Vorrichtungen, bespannte Tuchvorrichtungen, und/oder beliebig kinematische Vorrichtungen direkt und/oder indirekt über eine beliebige Lastträgervorrichtung 26 mit dem Lastkörper 11 verbunden sein. Der Lastkörper 11 kann grösser oder kleiner als die Vorrichtung sein.

### Statorschalen/Zugang/Türvorrichtung

Die Statorverbindungsvorrichtung 21 in Figur 1 besteht aus einer kugelförmigen Geometrie. Die beiden inneren parallelkinematischen Plattformen 18 der parallelkinematischer Vorrichtungen 17 können direkt oder über eine beliebige Lastträgervorrichtungen 26 miteinander verbunden sein oder aus einem Teil bestehen. Bei den vorliegenden Anwendungsbeispielen sind die inneren parallelkinematischen Plattformen 18 über eine Statorverbindungsvorrichtung 21 durch einen kugelsegmentförmigen, transparenten Festkörper miteinander verbunden. Damit ist ein Zugang von vorne und/oder hinten des Lastkörpers 11 möglich. Die Statorverbindungsvorrichtung 21 besteht aus mindestens einer festen Statorfestverbindung 99, und mindestens einem radialkinematischen Teil, nachfolgend auch Türvorrichtung 25 genannt. Die Türvorrichtungen 25 sind über manuell oder beliebig kinematische Vorrichtungen radial um die globale X-Achse 3 mit den inneren parallelkinematischen Plattformen 18 beweglich miteinander verbunden.

### Energieumwandlung/Energiegewinnungsverfahren/Schalenbeschaffenheit

Die Rotorverbindungsvorrichtungen 31 und/oder die Statorverbindungsvorrichtungen 21 können Trägervorrichtungen für verschiedene, anwendungsabhängige Vorrichtungen sein.

Die Vorrichtung kann mit Vorrichtungen zur Umwandlung von Sonnenenergie und/oder Windenergie in elektrischer Energie, kombiniert werden. Die Energie wird in Energiespeichervorrichtungen 39 gespeichert.

Als Energieumwandlungsvorrichtungen 65 können beliebige Antriebs- und/oder Energierückgewinnungsvorrichtungen, wie Motoren 60 und/oder Generatoren 85, Energierückgewinnenung durch Vorrichtungen zur Umwandlung der Kraftimpulse der Stossdämpfer in elektrische Energie und/oder in Hydraulikfeder- oder Luftdruckspeichervorrichtungen, und/oder Vorrichtungen zur Umwandlung von Energie, beispielsweise in Form von Solarzellen, und/oder zur Nutzung der Windenergie durch die Verwendung der Radmodule 33 als Windräder in Form eines Direktantriebes, mit den Streben 32 als feste oder verstellbare Rotortragfläche 103, und/oder als Fotovoltaikvorrichtung 104, verwendet werden.

Die Statorverbindungsvorrichtungen 21 und Rotorverbindungsvorrichtungen 31 mit kugelsegmentförmigen Seitenschalen 105 können beliebig mit transparenten oder teiltransparenten Vorrichtungen und/oder Materialteilen aus Acrylglas, mit eingegossenen und/oder aussenwandig angebrachten festen oder dynamischen, beispielsweise in Form von textil vernetzten Stoffstrukturen bestehenden Fotovoltaikvorrichtungen 104, verbunden sein und/oder aus diesen bestehen.

Die Fotovoltaikvorrichtung 104 kann als Ganzes oder in Form von Fotovoltaiksegmenten 106 in einem bestimmten Abstand zueinander beliebig mit der Vorrichtung verbunden sein. Bei den vorliegenden Anwendungsbeispielen sind die Fotovoltaiksegmente 106 sowohl mit einer mit dem Rotor 36 verbundenen transparenten Rotorganzschalen 63 als auch bei transparenten Statorschalen 101 als Lastträgervorrichtung 26 in kreisförmiger Anordnung verbaut. Durch die kreisförmige Anordnung und die spezifischen Abstände zwischen den Fotovoltaiksegmenten 106, verteilt auf mehrere Kreise mit unterschiedlichen Durchmessern ausserhalb des Sichtfeldes, ist eine Teiltransparenz der rotierenden Rotorganzschalen 63 durch den Unschärfeeffekt, nachfolgend auch Stroboskopeffekt genannt, möglich. Ein Teil des Sonnenlichts erreicht dadurch auch die innere Schalenvorrichtung mit den inneren Fotovoltaiksegmenten 106.

Die Vorrichtung kann, an Ort fixiert, teilfixiert, auf dem Wasser 13, und/oder innerhalb des Wassers 13 in Kombination kinematischer, entsprechend geformter Streben 32, mittels Taumelscheibenverfahren und Fotovoltaikvorrichtung 104, vertikal oder horizontal, als Generator zur Gewinnung von Wasser-, Gezeiten- und Sonnenkraftwerk, verwendet werden.

Die Vorrichtung kann auch aus einem oder mehreren Basismodulen 16 ohne Radkörper 37 bestehen.

### optische Anzeige von Geschwindigkeit und Umdrehungen

Der Stroboskopeffekt durch die rotierenden Fotovoltaiksegmenten 106 der Rotorganzschale 63 des Radmoduls 33 kann auch dazu genutzt werden, durch die spezifische Anordnung der Fotovoltaiksegmente 106 auf den rotierenden, transparenten Rotorganzschalen 63 oder Rotorschalensegmenten 64 und/oder überlagernd auf der Innenseite des Radkörpers 37, oder in Kombination mit Fotovoltaiksegmenten 106 und/oder beliebiger Signalisierungszeichen auf den Statorschalensegmenten 102, und/oder durch die Rotorganzschalen 63 in Kombination mit einer gerichteten Lichtquelle, ohne weitere Vorrichtung auf die Geschwindigkeit und die Umdrehungsgeschwindigkeit der Rotoren 36 zu schliessen.

### multifunktionales zweiteiliges Strassenverkehrsmodul

Die Vorrichtung kann mit einem multifunktionalen zweiteiligen Strassenverkehrsmodul 107 verbunden sein. Die beiden Teile sind jeweils auf der Aussenseite der Radmodule 33 fest oder schwenkbar um die lokalen X-Achsen 6 mit den Aussenseiten der Statoren 29 verbunden. Die Module können beispielsweise die Funktionen als passiver Wasserabstreifer 108 und Signalisierungsvorrichtung aufweisen und/oder zur mechanischen Scheibenreinigung der Rotorverbindungsvorrichtungen 31 zwecks aktiven Abstreifen des Wassers an den Rotorganzschalen 63 verwendet werden. Eine berührungslose Scheibenreinigung der Rotorganzschalen 63 ist durch ein trichterförmiges Hochdruckeinspritzverfahren mit Wasserrückgewinnungssystem möglich. Bei Radmodulen 33 mit Rotorganzschalen 63 wird dabei das Reinigungswasser mit Hochdruck in einem geeigneten Winkel aus einem entlang des Radius längs verlaufenden strömenden Wasserstrahls auf die rotierenden Rotorganzschalen 63 gespritzt und im Abprallwinkel des Wasserstrahls gleich wieder aufgesogen, rückgeführt und gereinigt. Dieses Prinzip eignet sich unter anderem auch zum Speichern von Regenwasser.

### Lastvolumenerweiterung

Ein Basismodul 16 rollend auf dem Boden 12 kann mit mindestens einem beliebigen Lastvolumenerweiterungsmodul 110 in Form einer Basismodulverbindungsvorrichtung 44, auch Basisverbindungsmodul 45 genannt, ohne oder mit mindestens einer zusätzlichen Rotationsvorrichtung 14 vorne, hinten, links und/oder rechts verbunden sein. Das Basisverbindungsmodul 45 kann in Form einer Anhängevorrichtung 109 mit mindestens einer zusätzlichen passiven oder aktiven fest oder beliebig kinematisch verbundenen Rotationsvorrichtung 14 oder Hilfsrad 48 über eine oder mehrere Basismodulverbindungsachsen 132 oder beliebig kinematisch mit dem Basismodul 16 verbunden sein. Die Rotationsvorrichtung 14 kann beispielsweise aus einem passiv kinematischen Schlepprad als Hilfsrad 48 bestehen. Die Anhängevorrichtung 109 kann parallel kinematisch und/oder beliebig mit dem Basismodul 16 verbunden sein. Es können auch mindestens zwei Basismodule 16 direkt miteinander verbunden werden.

Ein Lastvolumenerweiterungsmodul 110 kann mehrere Basismodule 16 kinematisch über eine Basismodulverbindungsvorrichtung 44 seriell hintereinander und/oder beliebig kinematisch miteinander verbinden. Die Basismodulverbindungsvorrichtung 44 kann mit dem Prinzip einer Sänfte 46 verglichen werden. Die Eigenschaften der Anordnung seriell hintereinander entspricht bei zwei Basismodulen 16 einem konventionellen Fahrzeug mit vier Rädern mit geometrischer Fahrspur. Die Basismodulverbindungsvorrichtung 44 kann beliebig seriellkinematisch und/oder parallel kinematisch, in der A-, H- und V-Radwinkelposition, über eine oder mehrere feste Statorverbindungsvorrichtungen 21 zentral, und/oder, in allen Radwinkelpositionen, seitlich über die Statoren 29 mit den Basismodulen 16 verbunden sein. Bei einer zentralen Basismodulverbindungsvorrichtung 44 können die Basismodule 16 um ihre globale Y-Achse 4 360° geschwenkt werden. Damit kann sich eine Vorrichtung mit einer Basismodulverbindungsvorrichtung 44 mit zwei Basismodulen 16 sowohl vorwärts als auch seitwärts rollend am Boden 12 fortbewegen. Die Verbindung kann manuell und/oder automatisch erfolgen. Es können mehr als zwei Basismodule 16 mit mehr als einer seitlich und längs neigbaren Basismodulverbindungsvorrichtungen 44 in einer Dimension, beispielsweise in Form einer Buskette, oder in mehreren Dimensionen als seriell hintereinander und/oder parallel nebeneinander verkettetes und/oder als dreidimensionales elektromechanisches Netzwerk, miteinander verbunden sein.

Eine Basismodulverbindungsvorrichtung 44 mit einem oder mehreren temporären Hilfsrädern 48 kann zwecks automatischem Verbindungsmanöver und/oder kompakter Stellfläche temporär auch von nur einem Basismodul 16 in Form einer Anhängevorrichtung 109 geschleppt oder gestossen werden.

### mechanische Modifizierung/Zerlegungsverfahren

Die Vorrichtung kann konstruktionsabhängig manuell, automatisch und/oder autonom erweitert, reduziert, aufgebaut und/oder zerlegt werden. Die einzelnen Baugruppen und/oder Komponenten können durch Schnellverschlusskupplungen wie Kugelgelenkverschlussvorrichtungen 28 miteinander verbunden sein. Die Schutzvorrichtungen 111 können aus transparenten, verschachtelten Faltvorrichtungen bestehen. Die Radkörper 37 und Radreifen 38 können aus einem Radkörper 37 oder mehreren Radkörpersegmenten 50 und aus einem Radreifen 38 oder mehreren Radreifensegmenten 51 bestehen. Damit ist unter anderem ein Herstellungsverfahren in Form vormonierter, in einander verschachtelter Baugruppen durch Frachttransport zwecks dezentraler Endmontage, möglich.

Die Rotorverbindungsvorrichtung 31 kann aus einer Dreipunktverbindung mit drei wiederverschliessbaren Kugelgelenkkupplungen, auch Kugelgelenkverschlussvorrichtung 28 genannt, als temporäre Verbindung zwischen dem Rotor 36 und dem Radkörper 37 bestehen. Dabei wird jeweils eine Kugelgelenkverschlussvorrichtung 28 des Radmoduls 33 bei anwendungsabhängiger Radialposition vom Radkörper 37 gelöst. Damit ist es möglich, das Radmodul 33 um die zwei geschlossenen Kugelgelenkverschlussvorrichtung 28 zu öffnen und zu schliessen. Dadurch ist nebst der Möglichkeit einer temporären Demontage ein seitlicher Zugang zum Lastkörper 11 und/oder zur Lastträgervorrichtung 26 möglich.

### Fortbewegungsformen und Bewegungen an Ort ohne Erweiterungsmodule

Die Vorrichtung ermöglicht in vertikaler Position mit globaler Y-Achse zur Gravitationskraft 58 ohne Erweiterungsmodule, eine Fortbewegung am Boden 12 rollend, durch eine Drehung um die eigene globale Y-Achse 4 an Ort, vorwärts rollend mit gleichen oder ungleichen Radwinkeln 93 unter anderem in der A-, H-, V- und I-Radwinkelposition, und/oder seitlich schrittweise auf gerader oder schiefer Ebene, Treppen und unebenem Gelände, und/oder schwimmend auf einem Medium wie Wasser 13.

Das Taumelscheibenverfahren beschreibt die kinematisch über die Rotorstrebenlängsachse, auch Rotorstrebenachse 34 genannt, mit dem Radmodul 33 verbundenen Streben 32, in diesem Zusammenhang auch Rotorstreben 35 genannt, die, abhängig von der radialen Position des Radmoduls 33 unterschiedliche Positionen aufweisen können. Dadurch ist sowohl eine Differenzialsteuerung zwischen den beiden Radmodulen 33 als auch innerhalb eines Radmodules 33 möglich.

Die Vorrichtung ermöglicht in der Kombination mit einem Taumelscheibenverfahren eine horizontale und/oder vertikale Fortbewegung ohne Erweiterungsmodul auf dem Boden 12 und/oder innerhalb eines Mediums wie Luft und/oder Wasser 13 und/oder im Vakuum.

Bei einer mit der inneren parallelkinematischen Plattform 18 verbundenen Plattformschwenkvorrichtung 84 oder mit einer weiteren gestapelten parallelkinematischen Vorrichtung 17 kann die äussere parallelkinematische Plattform 18 eine horizontale Position parallel zur globalen X-Achse 3 aufweisen. Dies entspricht einem Radwinkel von 90° der T-Radwinkelposition. In Kombination mit den rotierenden Radmodulen 33 gemäss einem mechanischen und/oder elektromechanischen Taumelscheibenverfahren kann die Vorrichtung als zweirotorige Hubschraubvorrichtung verwendet werden. Dabei ist das Basismodul 16 am Boden 12 über die Statorverbindungsvorrichtung 21 mit dem Boden 12 mittels beliebiger fester und/oder kinematischer Fuss- und/oder beliebigen Rotationsvorrichtung 14 verbunden.

Die Vorrichtung ermöglicht in der Kombination mit einem Taumelscheibenverfahren unter anderem eine horizontale Fortbewegung als Segelvorrichtung rollend auf dem Boden 12 oder auf dem Wasser 13 in Form eines Winddirektantriebes, oder eine stationäre und/oder sich fortbewegende Windturbinenvorrichtung 112. Das Taumelscheibenverfahren kann mechanisch, elektronisch, elektromechanisch zentral und/oder dezentral gesteuert erfolgen. Bei einem dezentral gesteuerten Taumelscheibenverfahren können die um die Strebenlängsachse 92 beweglichen Streben 32 beispielsweise in Form von Windschaufelsegel 113 mit Windsensoren auf den Streben 32 direkt, ohne elektronisch zentrale Steuerung, bewegt werden. Der Entscheidungsprozess erfolgt direkt zwischen den Sensoren und der kinematischen Vorrichtung zur Bewegung der Streben 32. Als natürliche Sensoren und Aktoren kann eine Federvorrichtung im Zusammenhang mit dem Kräfteeinfluss eines Mediums die Strebenposition der Streben 32 auch ohne elektronische Sensoren und Aktoren steuern. Dadurch können die Strebenwinkel durch Erfassen der Windrichtung in Bezug auf die Fahrtrichtung und weiteren Parameter, mittels einer beliebigen kinematischen Vorrichtung autonom, lokal gesteuert, bewegt werden. Dieses Verfahren eignet sich auch als Sicherheitsvorrichtung, durch unmittelbare Reaktion einer Transformation des Radwinkels 93 bei Einfluss von Seitenwindkräften, in eine A-Radwinkelposition.

Die Vorrichtung ermöglicht ohne Erweiterungsmodule ein Aufrichtverfahren des Basismoduls 16 am Boden 12 zwischen einer vertikalen Position mit globaler Y-Achse 4 in Richtung Gravitationskraft 58 und Berührung der Radkörper 37 und/oder Radreifen 38 mit dem Boden 12, einer horizontalen Position mit globaler X-Achse 3 in Richtung Gravitationskraft 58, und/oder einer schrägen Position mit und/oder ohne Berührung der Radkörper 37 und/oder Radreifen 38 mit dem Boden 12, seitwärts liegend an Ort. Dies ist anwendungsabhängig unter anderem durch einen elektronisch gesteuerten, spiralförmigen Bewegungsalgorithmus über die Antriebsvorrichtungen 61 der Radmodule 33 in Kombination mit einer parallelkinematischen Statorverbindungsvorrichtung, sowie kinematischen Energiespeichervorrichtungen 39, ohne weitere Vorrichtungen, und/oder beispielsweise mit einer elastischen Aufprallschutzvorrichtung in Form einer entsprechenden Kantenschutzvorrichtung 114, möglich.

Die Vorrichtung ermöglicht eine horizontale Fortbewegung ohne Erweiterungsmodule schwimmend auf einem Medium wie Wasser 13 mit senkrechter globaler Y-Achse 4, durch feste oder beliebig kinematisch differenzial bewegte Streben 32 als Seitenradantriebsschaufeln 129. Bei geschlossenem Basismodul 16 in der I-Radwinkelposition kann die Eintauchtiefe über eine beliebige Pumpvorrichtung zwecks Regulierung des Wasseranteils zwischen den Radmodulen 33 mit Rotorganzschalen 63 und der Statorverbindungsvorrichtung 21 mit geschlossenen Statorschalensegmenten 102, erfolgen.

### Fortbewegung eines einzelnen Radmoduls auf dem Boden

Das Basismodul 16 kann, reduziert auf ein Radmodul 33, als eigenständige Vorrichtung zur Fortbewegung verwendet werden. Dies ist beispielsweise bei der Anwendung einer einzelnen Rotationsvorrichtung 14 rollend auf dem Boden 12, mit parallelkinematischer Verbindung eines Stators 29 mit dem Lastkörper 11 durch eine asymmetrischen Statorverlängerung 115 mit asymmetrischer Lastträgervorrichtung 116, in Form eines asymmetrischen Einrades mit Stützvorrichtung 117 mit oder ohne Stützrad 118, manueller oder elektrischer Balancetechnik, beispielsweise durch die parallelkinematische Vorrichtung, und/oder bei der Anwendung beliebiger Gyrotechnologie, der Fall.

### Fortbewegungsformen mit Erweiterungungsmodulen

Die Vorrichtung ermöglicht eine horizontale und/oder vertikale Fortbewegung mit Erweiterungsmodulen innerhalb eines Mediums wie Luft und/oder Wasser 13 und/oder im Vakuum in beliebiger fester und/oder kinematischen Verbindung mit mindestens einer beliebigen Schubvorrichtung 42, Levitationsvorrichtungen und/oder beliebigen Vorrichtungen zur Fortbewegung innerhalb eines Mediums und/oder im Vakuum, in horizontaler und/oder vertikaler Position.

Bei den vorliegenden Anwendungsbeispielen in Figur 1 handelt es sich um mechanische Schubvorrichtungen 42. Die Schubvorrichtungen 42 sind über einen beliebigen Gelenkmechanismus ausserhalb der Radmodule 33 mit den Statoren 29 durch eine Schubverbindungsvorrichtungen 119 um die lokalen X-Achsen schwenkbar verbunden. Jede Schubvorrichtung 42 besteht aus einer, zwei oder, zwecks Reduktion von Vibration und Lärmemissionen, einer geraden Anzahl von um die Schubvorrichtungsrotorachse 120 rotierenden, hintereinander angeordneten Turbinenräder 121. Die Anordnung mehrerer Turbinenräder 121 hintereinander ermöglicht eine im Verhältnis zur Schubkraft kompakte Bauweise. Jedes Turbinenrad 121 dreht sich gegenüber den angrenzenden Turbinenräder 121 in entgegengesetzter Drehrichtung. Die Turbinenräder 121 werden durch lagerlose Torquemotoren mit Hohlwelle als Innenläufer betrieben. Die Rotationsgeschwindigkeiten der Turbinenräder 121 zueinander können, zwecks Verdichtungsverfahren der Luft im Verhältnis zur Fortbewegungsgeschwindigkeit, variieren. Die Turbinenräder 121 können unterschiedliche Anzahl Turbinenschaufeln 122 aufweisen. Bei der Verwendung von beidseitig je zwei schwenkbaren Schubvorrichtungen 42 ist eine horizontale und/oder vertikale Fortbewegung innerhalb eines Mediums wie Luft oder Wasser möglich. Bei einer entsprechenden Schubvorrichtung ist auch eine Fortbewegung im Vakuum möglich.

Die Vorrichtung ermöglicht eine horizontale Fortbewegung mit Erweiterungsmodul innerhalb eines Mediums wie Luft und/oder Wasser in beliebiger fester und/oder kinematischer Verbindung mit mindestens einer beliebigen Tragflächenvorrichtung 43.

Eine Tragflächensegment 123 kann aus einem Teil oder mehreren Teilen bestehen. Ein Tragflächensegment 123 kann durch eine Schwenkvorrichtung 83 während der Fortbewegung um die obere Schubvorrichtunglängsachse 124 von einer vertikalen in eine horizontale Position geschwenkt werden. Bei den vorliegenden Anwendungsbeispielen in Figur 1 handelt es sich um eine zweiteilige Tragflächenvorrichtung 43. Die Tragflächenvorrichtungen 43 besteht aus zwei, um die Schubvorrichtungslängsachse 124 über eine beliebige kinematische Vorrichtung schwenkbaren, und in der horizontalen Position über eine Tragflächenverbindungsvorrichtung 125 in Form einer Kugelgelenkverschlussvorrichtung 28 mit Gelenkpfanne punktuell, über eine Flächenverbindung, oder nicht mechanisch verbundenen Tragflächensegmente 123. Bei einer punktuellen Kugelgelenkverbindung der Tragflächenvorrichtung 43 bleiben die Tragflächensegmente 123 in allen Freiheitsgraden kinematisch miteinander verbunden. Bei einer parallelkinematischen, einer beliebigen Tragflächenverbindungsvorrichtung mit einer punktuellen, oder keiner direkten Verbindung der Tragflächensegmente 123, kann die Vorrichtung auch ohne Steuerklappen 126 durch die parallelkinematische Vorrichtung gesteuert werden. Die Tragflächensegmente 123 bestehen im inneren Bereich der Tragfläche, vergleichbar mit dem Prinzip eines Doppeldeckers, aus einem unteren Tragflächenbereich 127 und einem oberen Tragflächenbereich 128. Die Tragflächenvorrichtung 43 kann in der Kombination mit mindestens einer zentralen, oder beidseitig mindestens einer Schubvorrichtung 42, betrieben werden. Bei dem vorliegenden Anwendungsbeispiel entspricht ein Teil der Tragflächenverbindungsvorrichtung 125 dem äusseren Teil der um die Schubvorrichtungsrotorachse 120 schwenkbar verbundenen oberen Schubvorrichtung.

### mechanische Bodenverbindungsvorrichtungen zwecks Uebertragung von Daten und Energie, Dockingstationen

Die Vorrichtung kann zwecks der Übertragung von Energie, Daten und/oder zur Verrichtung einer beliebigen Arbeit in und/oder ausserhalb der Vorrichtung mit einer beliebigen Verbindungsvorrichtung verbunden sein. Die vorliegenden Figuren stellen mehrere Varianten von mechanischen Verbindungen mit dem Boden 12 in Form von Bodenverbindungsvorrichtungen 54 mit Energieleitungen 133 und Datenleitungen 134 dar. Die Verbindung kann stationär, kinematisch, fest oder berührungslos sein. In den Figuren 1, 3, 5, und 8 werden verschiedene zentrale und dezentrale Bodenverbindungsvorrichtungen 54 dargestellt.

### Anwendungsbeispiele von Basismodulen als Trackervorrichtung zur Nutzung von Sonnen- und/oder Windenergie

Ein Radmodul 33 kann als Verfolgervorrichtung, auch Trackervorrichtung 41 genannt, beispielsweise zur Gewinnung von Sonnen und/oder Windenergie, direkt oder indirekt fest und/oder kinematisch über den Stator 29 mittels beliebiger Bodenverbindungsvorrichtungen 54 mit dem Boden 12 verbunden sein. Es können anwendungsabhängig sowohl die konkaven, konvexen oder linearen Innenseiten als auch die Aussenseiten der Rotorschalen 62 genutzt werden.

Die Trackervorrichtung 41 kann aus einem spezifisch geöffneten Basismodul 16 bestehen, das über eine zentrale Bodenverbindungsvorrichtung 54 mit mechanischer Rasterauflage und Federkupplung, mit dem Boden 12 verbunden ist. Bei einem offenen parallelkinematischen Basismodul 16 mit nicht parallelen Radmodulen 33 kann das Sonnenlicht beispielsweise über die auf der kugelförmigen teiltransparenten Statorschale 101 mit Fotovoltaiksegmenten 106 und lichtreflektierender Oberfläche auf die Innenseiten der Fotovoltaikzellen auf der Innenseite der Radmodule 33 weiter gestreut werden. Die vertikale Verfolgung der Sonne um die globale X-Achse 3 ist über die parallelkinematische Vorrichtung möglich. Die horizontale Verfolgung um die globale Y-Achse 4 ist über ein Anheben des Basismoduls 16 über die parallelkinematischen Vorrichtung 17 durch einen Bodenkontakt der Radmodule, Schwenken durch die Radmodule 33 und anschliessend erneutes Senken in die neue Rasterposition des Basismoduls 16, möglich. Dadurch ergibt sich die Möglichkeit eines Trackerverfahrens zur Verfolgung der Sonnenposition ohne zusätzliche kinematische Vorrichtung seitens der Bodenverbindungsvorrichtung 54.

Die Vorrichtung kann auf Grund der Eigenschaften und der kreisförmigen Geometrie des Basismoduls 16 auch ohne Bodenverbindungsvorrichtungen 54 als fotovoltaische Trackervorrichtung 41 stehend an Ort eingesetzt werden.

### Anwendungsbeispiel eines manuell gesteuerten Basismoduls

Als Beispiel einer Anwendung eines einzelnen Basismoduls 16 kann ein manuelles, parallelkinematisches Steuerungsverfahren mit beliebiger Antriebsvorrichtung zum Betreiben einer Vorrichtung zur Fortbewegung mindestens einer Person 9, erwähnt werden. Das Steuerungsverfahren der Radmodule 33 kann hydraulisch pneumatisch und/oder elektrisch über eine Lenk- und Steuerungsvorrichtung, vergleichbar mit einer Motorradlenkvorrichtung, übertragen werden. Die Lenkvorrichtung ist mechanisch und/oder beliebig über eine beliebige Funkverbindung ferngesteuert mit dem Basismodul 16 verbunden. Damit kann die Vorrichtung zur Verrichtung einer beliebigen Arbeit innerhalb und ausserhalb des Basismoduls 166 kontrolliert werden. Die Lenkvorrichtung besteht aus einer im Zentrum der Lenkvorrichtung als funktional parallelkinematisches Modell des Basismoduls 16 in Form zweier Steuerknüppel. Die Lenkvorrichtungsgriffe sind jeweils mit den äusseren parallelkinematischen Plattformen 18 des Modells verbunden. Die entsprechenden Positionen der parallelkinematischen Vorrichtungen 17 des parallelkinematischen Modells werden auf die parallelkinematischen Vorrichtungen 17 des Basismoduls 16 proportional durch, hydraulische, pneumatische und/oder elektrische Verstärkervorrichtungen übertragen. Die Referenzpositionen sowie Begrenzungspositionen können beim Modell über entsprechende Magnet-, Feder- und Begrenzungsmechanismen ermöglicht werden. Damit ist eine Steuerung der Vorrichtung einschliesslich der parallelkinematischen Vorrichtung ohne elektronische Steuerung möglich.

### Anwendungsbeispiel elektromechanisches Netzwerk

Als Beispiel einer Anwendung mehrerer einzelner und/oder temporär getrennter und/oder verschachtelt und/oder gestapelt verbundener Basismodule 16, kann eine Vorrichtung zur mechanischen Reinigung und/oder Bearbeiten von Land und/oder Wasser, mittels Verfahren innerhalb und/oder ausserhalb der Basismodule 16, zwecks einsammeln, sortieren, wiederverwenden, filtern, zerkleinern, granulieren, einschmelzen beliebiger beliebiger Verunreinigungen, und neu formen, zwecks automatischer Produktion zur Herstellung beliebiger Gegenstände, und/oder zwecks Reproduktion weiterer Basismodule 16 durch die Basismodule 16 selber, in Form eines autonom intelligenten, elektromechanischen Netzwerkes, erwähnt werden.

### Anwendungsbereiche/Ausführungen

Die Vorrichtung kann in beliebiger Dimension, Form, wie ultraleichter, massiver, kompakter und/oder zerlegbarer Bauweise bestehen, manuell und/oder automatisch beliebig, in unterschiedlichen Leistungskategorien angetrieben, und manuell, ferngesteuert, automatisch und/oder autonom durch künstliche Intelligenz gesteuert werden.

Die Vorrichtung kann in den Anwendungsbereichen allgemeine und/oder spezielle Fahrzeugtechnologie, Transport-, Behindertentransport-, Medizinal-, Geländefahrzeug-, Agrar-, Unterhaltungs-, Spielzeug-, Schutz- und Rettungsfahrzeugs-, Abfall-, Sortier-, Filter-, Klär-, Reinigungs-, Recycling-, Mikro-, Molekular-, Roboter- , Drohnen-, Wasserfahrt-, Luftfahrt-, Raumfahrt- und Energiegewinnungstechnologie sowie im Zusammenhang mit künstlicher Intelligenz, eingesetzt werden.

Die Vorrichtung kann als geschlossenes System in Form eines einzelnen Basismoduls 16 und/oder als, im Verbund mit mehreren gleichen und/oder beliebigen Verbindungsvorrichtungen, physikalisch verbundenes, sich mechanisch selbstmodifizierbares und selbstreproduzierbares intelligentes Netzwerk betrieben werden.

### Bezugszeichenliste

- 1 -: globales Koordinatensystem Nullpunkt
- 2 -: lokales Koordinatensystem Nullpunkt
- 3 -: globale X-Achse
- 4 -: globale Y-Achse
- 5 -: globale Z-Achse
- 6 -: lokale X-Achse
- 7 -: lokale Y-Achse
- 8 -: lokale Z-Achse
- 9 -: Person
- 10-: Gegenstand
- 11-: Lastkörper
- 12-: Boden
- 13-: Wasser
- 14-: Rotationsvorrichtung
- 15 -: Radkörpervorrichtung
- 16 -: Basismodul
- 17- 28-: parallelkinematische Vorrichtung
- 18-: parallelkinematische Plattform
- 19-: parallelkinematisches Gelenk
- 20-: Symmetrieachse
- 21-: Statorverbindungsvorrichtung
- 22-: Statordistanzvorrichtung
- 23-: Statorschwenkvorrichtung
- 24-: Statordistanzsegment
- 25 -: Türvorrichtung
- 26-: Lastträgervorrichtung
- 27-: linearkinematischeVorrichtung
- 28-: Kugelgelenkverschlussvorrichtung
- 29-: Stator
- 30-: Torquemotor
- 31 -: Rotorverbindungsvorrichtung
- 32 -: Strebe
- 33 -: Radmodul
- 34 -: Rotorstrebenachse
- 35 -: Rotorstrebe
- 36 -: Rotor
- 37 -: Radkörper
- 38 -: Radreifen
- 39 -: Energiespeichervorrichtung
- 40 -: Bodenverbindungsmodul
- 41 -: Trackervorrichtung
- 42 -: Schubvorrichtung
- 43 -: Tragflächenvorrichtung
- 44 -: Basismodulverbindungsvorrichtung
- 45 -: Basisverbindungsmodul
- 46 -: Sänfte
- 47 -: aerodynamische Verbindungsschale
- 48 -: Hilfsrad
- 49 -: Einradanhängevorrichtung
- 50 -: Radkörpersegment
- 51 -: Radreifensegment
- 52 -: Kupplungsvorrichtung
- 53 -: Energiespeicherfussvorrichtung
- 54 -: Bodenverbindungsvorrichtung
- 55 -: Hauptverbindungsachse
- 56 -: Seitenverbindungsachse
- 57 -: Schervorrichtung
- 58 -: Gravitationskraft
- 59 -: Rotationsachse
- 60 -: Motor
- 61 -: Antriebsvorrichtung
- 62 -: Rotorschale
- 63 -: Rotorganzschale
- 64 -: Rotorschalensegmenten
- 65 -: Energieumwandlungsvorrichtung
- 66 -: Magnetlagervorrichtung
- 67 -: Aktor
- 68 -: Lagervorrichtung
- 69 -: Scharniervorrichtung
- 70 -: Hauptverbindungswelle
- 71 -: Hauptverbindungsachse
- 72 -: Steuerhebel
- 73 -: vordere Schervorrichtung
- 74 -: hintere Schervorrichtung
- 75 -: linker Scherschenkel
- 76 -: rechter Scherschenkel
- 77 -: Zylindervorrichtung
- 78 -: Stossdämpfer
- 79 -: Kugelgelenk
- 80 -: seriell kinematische Verbindungsvorrichtung
- 81 -: Statorstrebe
- 82 -: Hexapod
- 83 -: Schwenkvorrichtung
- 84 -: Plattformschwenkvorrichtung
- 85 -: Generator
- 86 -: Schleppwinkel
- 87 -: Bodenberührungspunkt
- 88 -: Energiespeichersegment
- 89 -: Exzentervorrichtung
- 90 -: Exzenterverlaufsachse
- 91 -: Schervorrichtungssteuerhebel
- 92 -: Strebenlängsachse
- 93 -: Radwinkel
- 94 -: Radwinkeldrehpunkt
- 95 -: Hydraulikzylinder
- 96 -: Längsneigungswinkel
- 97 -: Seitenneigungswinkel
- 98 -: Akkumulator
- 99 -: Statorfestverbindung
- 100-: Seitenfenstervorrichtung
- 101-: Statorschale
- 102-: Statorschalensegment
- 103-: Rotortragfläche
- 104-: Fotovoltaikvorrichtung
- 105-: Seitenschale
- 106-: Fotovoltaiksegment
- 107-: Strassenverkehrsmodul
- 108-: Wasserabstreifer
- 109-: Anhängevorrichtung
- 110-: Lastvolumenerweiterungsmodul
- 111-: Schutzvorrichtung
- 112-: Windturbinenvorrichtung
- 113-: Windschaufelsegel
- 114-: Kantenschutzvorrichtung
- 115-: asymmetrische Statorverlängerung
- 116-: asymmetrische Lastträgervorrichtung
- 117-: Stützvorrichtung
- 118-: Stützrad
- 119-: Schubverbindungsvorrichtung
- 120-: Schubvorrichtungsrotorachse
- 121-: Turbinenrad
- 122-: Turbinenschaufel
- 123-: Tragflächensegment
- 124-: Schubvorrichtungslängsachse
- 125-: Tragflächenverbindungsvorrichtung
- 126-: Steuerklappe
- 127-: unterer Tragflächenbereich
- 128-: oberer Tragflächenbereich
- 129-: Seitenradantriebsschaufel
- 130-: Energiespeicherschwenkachse
- 131-: Radkörpergelenk
- 132-: Basismodulverbindungsachse
- 133-: Energieleitung
- 134-: Datenleitung

## Patentansprüche

1. Fahrzeug, umfassend einen ersten Fahrzeugteil (14) und einen zweiten Fahrzeugteil (14), wobei der erste Fahrzeugteil (14) ein um eine erste Drehachse (59) drehbares erstes Laufrad (38) umfasst und wobei der zweite Fahrzeugteil (14) ein um eine zweite Drehachse (59) drehbares zweites Laufrad (38) umfasst,
wobei das erste Laufrad (38) und das zweite Laufrad (38) denselben Laufraddurchmesser aufweisen,
wobei eine erste Lagerung zur drehbaren Lagerung des ersten Laufrads (38) und eine zweite Lagerung zur drehbaren Lagerung des zweiten Laufrads (38) über einen Gelenkmechanismus (80) derart miteinander verbunden sind, dass eine relative Ausrichtung der ersten Drehachse (59) und der zweiten Drehachse (59) zueinander veränderlich ist,
**dadurch gekennzeichnet, dass** das Fahrzeug mit Hilfe des Gelenkmechanismus (80) aus einer ersten Fahrkonfiguration mit zueinander geneigten erster und zweiter Drehachse (59) kontinuierlich in eine zweite Fahrkonfiguration mit paralleler erster und zweiter Drehachse (59) überführbar ist,
wobei in der zweiten Fahrkonfiguration ein Abstand einer ersten Kontaktfläche (38) des ersten Laufrads (38) von einer zweiten Kontaktfläche (38) des zweiten Laufrads (38) kleiner ist als ein Zehntel des Laufraddurchmessers.

2. Fahrzeug nach Anspruch 1, **dadurch gekennzeichnet, dass** sich das erste Laufrad und das zweite Laufrad in der ersten Fahrkonfiguration und/oder in der zweiten Fahrkonfiguration im Bereich ihres Umfangs berühren.

3. Fahrzeug nach Anspruch 1 oder 2, **dadurch gekennzeichnet, dass** der erste Fahrzeugteil (14) und der zweite Fahrzeugteil (14) als flächige Seitenteile, insbesondere als Halbschalen (14), ausgebildet sind, die zusammen einen Aufnahmeraum einschliessen, wobei eine radiale Ausdehnung der Halbschalen (14) 75-100% des Laufraddurchmessers beträgt, wobei der Laufraddurchmesser insbesondere mindestens 1.2 m beträgt und der Aufnahmeraum insbesondere eine Plattform zur Aufnahme mindestens einer Person umfasst.

4. Fahrzeug nach einem der Ansprüche 1 bis 3, **dadurch gekennzeichnet, dass** die Überführung von der ersten in die zweite Fahrkonfiguration und von der zweiten in die erste Fahrkonfiguration während der Fahrt des Fahrzeugs möglich ist.

5. Fahrzeug nach Anspruch 4, **dadurch gekennzeichnet, dass** die Überführung zwischen der ersten Fahrkonfiguration und der zweiten Fahrkonfiguration automatisch, in Abhängigkeit einer Fahrtgeschwindigkeit des Fahrzeugs erfolgt.

6. Fahrzeug nach einem der Ansprüche 1 bis 5, **dadurch gekennzeichnet, dass** jeder der Fahrzeugteile (14) einen unabhängig steuerbaren Motor (30, 60) umfasst.

7. Fahrzeug nach Anspruch 6, **dadurch gekennzeichnet, dass** die Motoren (30, 60) als Elektromotoren ausgebildet sind, wobei an mindestens einem Stator (29) eines der Motoren (30, 60) innenliegend eine Tragevorrichtung (26) für aufzunehmende Lasten angeordnet ist.

8. Fahrzeug nach einem der Ansprüche 1 bis 7, **dadurch gekennzeichnet, dass** eine Schwenkachse des Gelenkmechanismus (80) einen radialen Abstand von der ersten Drehachse (59) und von der zweiten Drehachse (59) aufweist, der mindestens ein Drittel des Laufraddurchmessers, insbesondere mindestens 4/10 des Laufraddurchmessers beträgt.

9. Fahrzeug nach einem der Ansprüche 1 bis 8, **dadurch gekennzeichnet, dass** der Gelenkmechanismus (80) parallelkinematisch ausgebildet ist.

10. Fahrzeug nach einem der Ansprüche 1 bis 9, **dadurch gekennzeichnet, dass** der Gelenkmechanismus (80) seriell kinematisch ausgebildet ist.

11. Fahrzeug nach einem der Ansprüche 1 bis 10, **gekennzeichnet durch** eine Stützeinheit (48), welche mit dem ersten und dem zweiten Fahrzeugteil (14) verbunden ist und mindestens eine weitere Bodenkontaktfläche aufweist.

12. Fahrzeugteil für ein Fahrzeug nach einem der Ansprüche 1 bis 11, umfassend ein um eine Drehachse (59) drehbares Laufrad (38), einen Antrieb (30, 60) für das Laufrad und ein Anschlusselement für einen Gelenkmechanismus.

13. Fahrzeuganordnung, umfassend mindestens zwei Fahrzeuge nach einem der Ansprüche 1 bis 11, welche mechanisch, insbesondere lösbar, miteinander verbunden sind.

14. Fahrzeuganordnung nach Anspruch 13, **dadurch gekennzeichnet, dass** die mindestens zwei Fahrzeuge durch einen Verbindungsteil (44) miteinander verbunden sind, wobei der Verbindungsteil (44) einen Aufnahmeraum (46) für aufzunehmende Lasten bereitstellt.

15. Verfahren zum Transformieren eines Fahrzeugs, insbesondere eines Fahrzeugs nach einem der Ansprüche 1 bis 11, zwischen einer ersten Fahrkonfiguration und einer zweiten Fahrkonfiguration, wobei
a) das Fahrzeug einen ersten Fahrzeugteil (14) und einen zweiten Fahrzeugteil (14) umfasst, wobei der erste Fahrzeugteil (14) ein um eine erste Drehachse (59) drehbares erstes Laufrad (38) umfasst und wobei der zweite Fahrzeugteil (14) ein um eine zweite Drehachse (59) drehbares zweites Laufrad (38) umfasst, wobei das erste Laufrad (38) und das zweite Laufrad (38) denselben Laufraddurchmesser aufweisen,
b) eine relative Ausrichtung der ersten Drehachse (59) und der zweiten Drehachse (59) zueinander verändert wird, so dass das Fahrzeug aus der ersten Fahrkonfiguration mit zueinander geneigten erster und zweiter Drehachse (59) kontinuierlich in die zweite Fahrkonfiguration mit paralleler erster und zweiter Drehachse (59) überführt wird.

## Claims

1. A vehicle comprising a first vehicle part (14) and a second vehicle part (14), wherein the first vehicle part (14) comprises a first running wheel (38) rotatable about a first rotation axis (59), and wherein the second vehicle part (14) comprises a second running wheel (38) rotatable about a second rotation axis (59);
wherein the first running wheel (38) and the second running wheel (38) have identical running wheel diameters;
wherein a first mounting for rotatably mounting the first running wheel (38) and a second mounting for rotatably mounting the second running wheel (38) are connected to one another by way of an articulated mechanism (80) in such a manner that a relative mutual alignment of the first rotation axis (5) and the second rotation axis (59) is variable,
**characterized in that** the vehicle with the aid of the articulated mechanism (80) is able to be converted from a first driving configuration in which the first and the second rotation axis (59) are mutually inclined to a second driving configuration in which the first and the second rotation axis (59) are parallel,
wherein in the second driving configuration a spacing of a first contact face (38) of the first running wheel (38) from a second contact face(38) of the second running wheel (38) is smaller than one tenth of the running wheel diameter.

2. The vehicle as claimed in claim 1, **characterized in that** the first running wheel and the second running wheel in the first driving configuration and/or in the second driving configuration contact one another in the region of the circumference of said driving wheels.

3. The vehicle as claimed in claim 1 or 2, **characterized in that** the first vehicle part (14) and the second vehicle part (14) are configured as planar lateral parts, in particular as half shells (14), which conjointly enclose a receptacle space, wherein a radial extent of the half shells (14) is 75 to 100% of the running wheel diameter, wherein the running wheel diameter is in particular at least 1.2 m, and the receptacle space has in particular a platform for receiving at least one person.

4. The vehicle as claimed in one of claims 1 to 3, **characterized in that** the conversion from the first to the second driving configuration and from the second to the first driving configuration is possible while the vehicle is in motion.

5. The vehicle as claimed in claim 4, **characterized in that** the conversion between the first driving configuration and the second driving configuration takes place automatically as a function of a driving speed of the vehicle.

6. The vehicle as claimed in one of claims 1 to 5, **characterized in that** each of the vehicle parts (14) comprises an independently controllable motor (30, 60) .

7. The vehicle as claimed in claim 6, **characterized in that** the motors (30, 60) are configured as electric motors, wherein a support device (26) for loads to be received is disposed on the inside of at least one stator (29) of one of the motors (30, 60).

8. The vehicle as claimed in one of claims 1 to 7, **characterized in that** a pivot axis of the articulated mechanism (80) has a radial spacing from the first rotation axis (59) and from the second rotation axis (59) which is at least one third of the running wheel diameter, in particular at least 4/10 of the running wheel diameter.

9. The vehicle as claimed in one of claims 1 to 8, **characterized in that** the articulated mechanism (80) is configured so as to be parallel kinematic.

10. The vehicle as claimed in one of claims 1 to 9, **characterized in that** the articulated mechanism is configured so as to be serial kinematic.

11. The vehicle as claimed in one of claims 1 to 10, **characterized by** a support unit (48) which is connected to the first and to the second vehicle part (14) and has at least one further ground contact face.

12. A vehicle part for a vehicle as claimed in one of claims 1 to 11, comprising a running wheel (38) rotatable about a rotation axis (59), a drive (30, 60) for the running wheel (38), and a connector element for an articulated mechanism.

13. A vehicle assembly comprising at least two vehicles as claimed in one of claims 1 to 11, said vehicles being mechanically connected to one another, in particular in a releasable manner.

14. The vehicle assembly as claimed in claim 13, **characterized in that** the at least two vehicles are connected to one another by a connection part (44), wherein the connection part (44) provides a receptacle space (46) for loads to be received.

15. A method for transforming a vehicle, in particular a vehicle as claimed in one of claims 1 to 11, between a first driving configuration and a second driving configuration, wherein
a) the vehicle comprises a first vehicle part (14) and a second vehicle part (14), wherein the first vehicle part (14) comprises a first running wheel (38) rotatable about a first rotation axis (59), and wherein the second vehicle part (14) comprises a second running wheel (38) rotatable about a second rotation axis (59), wherein the first running wheel (38) and the second running wheel (38) have identical running wheel diameters;
b) a relative mutual alignment of the first rotation axis (59) and the second rotation axis (59) is varied such that the vehicle from the first driving configuration in which the first and the second rotation axis (59) are mutually inclined is continuously converted to the second driving configuration in which the first and the second rotation axis (59) are parallel.

## Revendications

1. Véhicule comprenant une première partie de véhicule (14) et une deuxième partie de véhicule (14), sachant que la première partie de véhicule (14) comprend une première roue mobile (38) pouvant tourner autour d'un premier axe de rotation (59) et sachant que la deuxième partie de véhicule (14) comprend une deuxième roue mobile (38) pouvant tourner autour d'un deuxième axe de rotation (59),
sachant que la première roue mobile (38) et la deuxième roue mobile (38) comportent le même diamètre de roue mobile,
sachant qu'un premier ensemble de support pour le logement pouvant tourner de la première roue mobile (38) et qu'un deuxième ensemble de support pour le logement pouvant tourner de la deuxième roue mobile (38) sont reliés entre eux par un mécanisme articulé (80) de telle manière qu'une orientation relative du premier axe de rotation (59) et du deuxième axe de rotation (59) est variable l'un par rapport à l'autre,
**caractérisé en ce que** le véhicule peut être transféré à l'aide du mécanisme articulé (80) d'une première configuration de marche avec un premier et un deuxième axe de rotation (59) incliné l'un par rapport à l'autre en continu dans une deuxième configuration de marche avec un premier et deuxième axe de rotation (59) parallèles,
sachant que dans la deuxième configuration de marche, une distance d'une première surface de contact (38) de la première roue mobile (38) d'une deuxième surface de contact (38) de la deuxième roue mobile (38) est plus petite qu'un dixième du diamètre de roue mobile.

2. Véhicule selon la revendication 1, **caractérisé en ce que** la première roue mobile et la deuxième roue mobile se touchent dans la zone de leur périphérie dans la première configuration de marche et/ou dans la deuxième configuration de marche.

3. Véhicule selon la revendication 1 ou 2, **caractérisé en ce que** la première partie de véhicule (14) et la deuxième partie de véhicule (14) sont constituées sous la forme de parties latérales de surface, en particulier sous la forme de demi-coques (14), qui constituent ensemble un espace de logement, sachant qu'une extension radiale des demi-coques (14) représente 75-100 % du diamètre de roue mobile, sachant que le diamètre de roue mobile est au minimum de 1,2 m et l'espace de logement comprend au minimum une plateforme pour recevoir au moins une personne.

4. Véhicule selon l'une quelconque des revendications 1 à 3, **caractérisé en ce que** le transfert de la première à la deuxième configuration de marche et de la deuxième à la première configuration de marche est possible pendant la marche du véhicule.

5. Véhicule selon la revendication 4, **caractérisé en ce que** le transfert entre la première configuration de marche et la deuxième configuration de marche a lieu automatiquement en fonction d'une vitesse de marche du véhicule.

6. Véhicule selon l'une quelconque des revendications 1 à 5, **caractérisé en ce que** chacune des parties de véhicule (14) comprend un moteur (30, 60) pouvant être commandé de façon indépendante.

7. Véhicule selon la revendication 6, **caractérisé en ce que** les moteurs (30, 60) sont constitués sous la forme de moteurs électriques, sachant qu'un dispositif de support (26) pour des charges à loger est disposé à l'intérieur sur au moins un stator (29) d'un des moteurs (30, 60).

8. Véhicule selon l'une quelconque des revendications 1 à 7, **caractérisé en ce qu'**un axe de pivotement du mécanisme articulé (80) comporte une distance radiale du premier axe de rotation (59) et du deuxième axe de rotation (59), qui est au minimum un tiers du diamètre de roue mobile, en particulier au moins les 4/10 du diamètre de roue mobile.

9. Véhicule selon l'une quelconque des revendications 1 à 8, **caractérisé en ce que** le mécanisme articulé (80) est constitué selon une cinématique parallèle.

10. Véhicule selon l'une quelconque des revendications 1 à 9, **caractérisé en ce que** le mécanisme articulé (80) est constitué de façon cinématique en série.

11. Véhicule selon l'une quelconque des revendications 1 à 10, **caractérisé par** une unité de support (48), laquelle est reliée à la première et à la deuxième partie de véhicule (14) et comporte au moins une autre surface de contact au sol.

12. Partie de véhicule pour un véhicule selon l'une quelconque des revendications 1 à 11, comprenant une roue mobile (38) pouvant tourner autour d'un axe de rotation (59), un système d'entraînement (30, 60) pour la roue mobile et un élément de raccord pour un mécanise articulé.

13. Agencement de véhicules comprenant au moins deux véhicules selon l'une quelconque des revendications 1 à 11, lesquels sont reliés entre eux de façon mécanique, en particulier de façon amovible.

14. Agencement de véhicules selon la revendication 13, **caractérisé en ce qu'**au moins deux véhicules sont reliés entre eux par une partie de liaison (44), sachant que la partie de liaison (44) offre un espace de logement (46) pour des charges à loger.

15. Procédé de transformation d'un véhicule, en particulier d'un véhicule selon l'une quelconque des revendications 1 à 11, entre une première configuration de marche et une deuxième configuration de marche, sachant que
a) le véhicule comprend une première partie de véhicule (14) et une deuxième partie de véhicule (14), sachant que la première partie de véhicule (14) comprend une première roue mobile (38) pouvant tourner autour d'un premier axe de rotation (59) et sachant que la deuxième partie de véhicule (14) comprend une deuxième roue mobile (38) pouvant tourner autour d'un deuxième axe de rotation (59), sachant que la première roue mobile (38) et la deuxième roue mobile (38) comportent le même diamètre de roue mobile,
b) une orientation relative du premier axe de rotation (59) et du deuxième axe de rotation (59) est modifiée l'un par rapport à l'autre de telle manière que le véhicule est transféré de la première configuration de marche avec un premier et un deuxième axe de rotation (59) incliné l'un par rapport à l'autre en continu dans la deuxième configuration de marche avec un premier et deuxième axe de rotation (59) parallèle.
